# EUROPÄISCHE PATENTSCHRIFT

(11) **EP 2 313 451 B1**
(45) Veröffentlichungstag und Bekanntmachung des Hinweises auf die Patenterteilung: **19.09.2012**
(21) Anmeldenummer: 09781306.7
(22) Anmeldetag: 30.07.2009
(51) Int. Cl.: C08G 18/66, C08G 18/67, C08G 18/78, C09D 175/16, C09D 11/10, C09D 17/00

(54) **VERWENDUNG VON WÄSSRIGEN POLYURETHAN-DISPERSIONEN IN DRUCKFARBEN UND ENTSPRECHENDES DRUCKVERFAHREN**
USE OF AQUEOUS POLYURETHANE DISPERSIONS IN PRINTING INKS AND CORRESPONDING PRINTING PROCESS
UTILISATION DE DISPERSIONS AQUEUSES DE POLYURÉTHANE DANS DES ENCRES D IMPRESSION ET PROCÉDÉ D IMPRESSION CORRESPONDANT

(30) Priorität: 12.08.2008 EP 08162200
(43) Veröffentlichungstag der Anmeldung: 27.04.2011
(73) Patentinhaber: BASF SE, 67056 Ludwigshafen (DE)
(72) Erfinder: TÜRK, Holger, 68161 Mannheim (DE); SCHWALM, Reinhold, 67157 Wachenheim (DE); DU FRESNE VON HOHENESCHE, Cedric, NL-1354 GM Almere (NL); BEK, Martin Kaarup, NL-8521 Sint Nicolaasga (NL)
(86) Internationale Anmeldenummer: PCT/EP2009/059895
(87) Internationale Veröffentlichungsnummer: WO 2010/018074

(56) Entgegenhaltungen:
- WO-A-2006/089933
- DE-A1- 2 450 786
- DE-A1-102005 057 684
- DATABASE WPI Week 200757 Thomson Scientific, London, GB; AN 2007-593599 XP002550071 & JP 2007 161742 A (TOYO INK MFG CO LTD) 28. Juni 2007 (2007-06-28)

## Beschreibung

Die vorliegende Erfindung betrifft die Verwendung von wässrigen Dispersionen, enthaltend ein zumindest partiell mit einem Polyurethan (A) umhülltes Pigment (B) und weiterhin mindestens einen Polymerisationsinhibitor (C), wobei Polyurethan (A) erhältlich ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindungen mit mindestens zwei mit Isocyanat zur Reaktion befähigten Gruppen,
wobei Angaben in Gew.-% auf gesamtes Polyurethan (A), mit der Maßgabe, daß die Summe 100 Gew% beträgt, bezogen sind in Druckfarben.

Aus der Internationalen Anmeldung WO 2008/098972 sind derartige Produkte bekannt sowie deren Verwendung für Ink-Jet-Anwendungen.

Häufig ist man vor die Aufgabe gestellt, Pigmente in flüssigem und insbesondere wässrigem Medium zu dispergieren, um sie beispielsweise zu Aufzeichnungsflüssigkeiten und insbesondere Tinten oder Druckfarben weiterzuverarbeiten. Druckfarben müssen lagerstabil sein und eine homogene Verteilung der Pigmente in der Farbe aufzeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Nassreibechtheit, gegebenenfalls nach Nachbehandlung wie beispielsweise Fixierung, und gutes Trocknungsverhalten aufweisen.

Um besonders gute Echtheiten wie beispielsweise Reibechtheiten (Nass- und Trockenreibechtheit) von bedruckten Substraten zu gewährleisten, kann man Drucke durch sogenannte Strahlungshärtung fixieren. Dazu kann man sogenannte strahlungshärtbare Tinten einsetzen, s. beispielsweise US 5,623,001 und EP 0 993 495. Strahlungshärtbare Ink-Jet-Tinten enthalten üblicherweise ein Material, dass durch Einstrahlung von aktinischer Strahlung gehärtet werden kann. Außerdem kann man strahlungshärtbaren Ink-Jet-Tinten einen Photoinitiator beifügen.

In WO 2006/089933 werden wässrige Dispersionen offenbart, die Allophanatgruppenhaltige strahlungshärtbare Polyurethane enthalten, sowie die Verwendung der betreffenden Dispersionen in Ink-Jet-Tinten. Man erhält, wenn man die offenbarten Ink-Jet-Tinten verdruckt, nach der Einwirkung von aktinischer Strahlung bedruckte Substrate mit sehr guten Echtheiten. In vielen Fällen ist es jedoch gar nicht gewünscht, beim Aushärten der Drucke auf aktinische Strahlung angewiesen zu sein. Eine gleichmäßige Aushärtung von Drucken auf nicht-ebenen Substraten setzt eine optimierte Geometrie der Strahlungsquellen voraus, die nicht immer gewährleistet werden kann. Eine thermische Aushärtung der in WO 20061089933 offenbarten Tinten ist jedoch nur in solchen Fällen möglich, in denen die betreffenden Tinten ohne Stabilisator (Radikalfänger, Polymerisationsinhibitor) hergestellt sind. Derartige Tinten hingegen weisen in einigen Fällen eine eingeschränkte Lagerfähigkeit auf.

Es bestand die Aufgabe, Druckfarben für Druckverfahren bereit zu stellen, die sich besonders gut durch Einwirkung aktinischer Strahlung und/oder thermisch aushärten lassen und gleichzeitig eine gute Lagerfähigkeit aufweisen.

Dementsprechend wurden eingangs definierte Verwendung wässriger Dispersionen gefunden. Die erfindungsgemäße Verwendung bezieht sich auf solche Druckfarben, wie sie in Druckverfahren ausgewählt aus der Gruppe bestehend aus Offsetdruck, Hochdruck, Flexodruck, Gravurdruck und Tiefdruck (dort zumeist als "Tinten" bezeichnet) eingesetzt werden.

Dem deutschen Sprachgebrauch folgend wird der Begriff "Tinte" in dieser Anmeldung ausschließlich für Farbflüssigkeiten für Faserschreiber, Fineliner, Filzstifte, Füllfederhalter, Marker, Tintenkugelschreiber, Stempelkissen, Farbbänder und vor allem Ink-Jet-Flüssigkeit verwendet.

Dagegen wird der Begriff "Druckfarbe" in dieser Anmeldung als Sammelbezeichnung für farbmittelhaltige Zubereitungen mit unterschiedlicher Konsistenz, die ausschließlich mittels einer Druckform auf einen Bedruckstoff übertragen und dort als Farbfilm (Druck) fixiert werden (CEPE-Definition).

Unter Polyurethanen sind im Rahmen der vorliegenden Erfindung nicht nur solche Polymere zu verstehen, die ausschließlich durch Urethangruppen verknüpft sind, sondern in einem allgemeineren Sinne Polymere, die durch Umsetzung von Di- oder Polyisocyanaten mit Verbindungen erhalten werden können, die aktive Wasserstoffatome enthalten. Polyurethane im Sinne der vorliegenden Erfindung können also neben Urethangruppen auch Harnstoff-, Allophanat-, Biuret-, Carbodiimid-, Amid-, Ester, Ether-, Uretonimin-, Uretdion-, Isocyanurat- oder Oxazolidingruppen enthalten. Als Übersicht sei beispielhaft genannt: Kunststoffhandbuch/Saechtling, 26. Auflage, Carl-Hanser-Verlag, München 1995, Seite 491 ff. Insbesondere enthalten Polyurethane im Sinne der vorliegenden Erfindung Allophanatgruppen.

In einer Ausführungsform der vorliegenden Erfindung handelt es sich bei Polyurethan (A) nicht um hyperverzweigtes Polyurethan. Hyperverzweigte Polyurethane sind als solche bekannt und beispielsweise in J.M.S. - Rev. Macromol. Chem. Phys. 1997, C37(3), 555 beschrieben.

Erfindungsgemäße wässrige Dispersionen enthalten ein zumindest partiell mit einem Polyurethan (A) umhülltes Pigment (B).

Dabei wird im Folgenden unter "zumindest partiell mit mindestens einem Polyurethan umhülltem Pigment" solches Pigment in partikulärer Form verstanden, dessen äußere Oberfläche vollständig oder teilweise von Polyurethan (A) bedeckt ist. Auch Mischungen von Pigment in partikulärer Form, bei denen ein gewisser Prozentsatz der Pigmentpartikel nicht mit Polyurethan (A) umhüllt ist und bei denen die äußere Oberfläche der übrigen Pigmentpartikel vollständig oder teilweise von Polyurethan (A) bedeckt sind, fallen unter die Definition von "zumindest partiell mit einem Polyurethan (A) umhülltem Pigment".

Dabei kann es sich bei Polyurethan (A) um ein oder mehrere Polyurethane (A) handeln. Wenn es sich um mehrere Polyurethane handelt, so werden Zahlenangaben im Zusammenhang mit Polyurethan (A) stets auf die Gesamtheit an Polyurethanen (A) bezogen.

In einer Ausführungsform der vorliegenden Erfindung sind in zumindest partiell mit mindestens einem Polyurethan (A) umhülltem Pigment mindestens 10%, bevorzugt mindestens 20% und besonders bevorzugt mindestens 30% der äußeren Oberfläche mit Polyurethan (A) bedeckt.

Der Grad der Umhüllung lässt sich beispielsweise durch Messung des Zeta-Potenzials, durch mikroskopische Methoden wie beispielsweise Lichtmikroskopie oder Methoden der Elektronenmikroskopie (TEM, Kryo-TEM, SEM) und ganz speziell mit Hilfe der Gefrierbruchpräparationstechnik, NMR-Spektroskopie oder Photoelektronenspektroskopie an getrocknetem zumindest partiell umhülltem Pigment bestimmen.

Zumindest partiell zu umhüllende Pigmente (B) erhält man im Rahmen der vorliegenden Erfindung durch zumindest partielles Umhüllen von in Wasser praktisch nicht löslichen feinteiligen organischen oder anorganischen Farbmitteln gemäß der Definition in DIN 55944. Bevorzugt geht man zur Herstellung von erfindungsgemäßen wässrigen Dispersionen von organischen Pigmenten aus, wobei Ruß mit umfasst ist. Des weiteren sind Weißpigmente gleichermaßen bevorzugt, insbesondere Titandioxid. Im Folgenden sind Beispiele für besonders gut geeignete Pigmente (B) genannt.

Organische Pigmente:
- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206;
   C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64
   (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260;
   C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16;
   C.I. Pigment Green 7 und 36;
- Pyranthronpigmente: C.I. Pigment Orange 51; C.I. Pigment Red 216
   (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
C.I. Pigment Yellow 101 (Aldazingelb);
C.I. Pigment Brown 22.

### Anorganische Pigmente:

- Weißpigmente: Titandioxid (C.I. Pigment White 6), Zinkweiß, Farbenzinkoxid, Bariumsulfat, Zinksulfid, Lithopone; Bleiweiß; Calziumcarbonat;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot;
Eisenoxidbraun, Mischbraun, Spinell- und Korundphasen (C.I. Pigment Brown 24, 29 und 31), Chromorange;
Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente (B) sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente, Weißpigmente und Ruße zu nennen. Beispiele für besonders bevorzugte Pigmente (B) sind im einzelnen: Ruß, Titandioxid, C.I. Pigment Yellow 138, C.I. Pigment Red 122 und 146, C.I. Pigment Violet 19, C.I. Pigment Blue 15:3 und 15:4, C.I. Pigment Black 7, C.I. Pigment Orange 5, 38 und 43 und C.I. Pigment Green 7.
In einer Ausführungsform der vorliegenden Erfindung weist Polyurethan (A) eine Glastemperatur, bestimmbar beispielsweise durch Differentialthermoanalyse (DSC), von maximal 50°C auf, bevorzugt maximal 40°C, bestimmt gemäß ASTM 3418/82 bei einer Aufheizrate von 10 °C/min.

Polyurethane (A) im Sinne der vorliegenden Erfindung sind erhältlich durch Umsetzung von
(a) 15 bis 70 Gew.-%, bevorzugt 30 bis 60 Gew.-% Di- oder Polyisocyanat, das im Mittel 1 bis 10 Allophanatgruppen und im Mittel 1 bis 10 C-C-Doppelbindungen pro Molekül aufweist, wobei Mittelwerte sich vorzugsweise jeweils auf das Zahlenmittel beziehen, mit
(b) null bis 60 Gew.-%, bevorzugt bis 20 Gew.-% weiterem Di- oder Polyisocyanat und
(c) 5 bis 50 Gew.-%, bevorzugt 30 bis 50 Gew.-% Verbindungen mit mindestens zwei mit Isocyanat zur Reaktion befähigten Gruppen.

Bei mindestens einem Di- oder Polyisocyanat (a), das im Mittel 1 bis 10, bevorzugt bis 5 Allophanatgruppen und im Mittel pro Molekül 1 bis 10, bevorzugt bis 5 C-C-Doppelbindungen pro Molekül aufweist, wobei Mittelwerte sich jeweils auf das Gewichtsmittel und bevorzugt auf das Zahlenmittel beziehen, handelt es sich um eine Verbindung, die vorzugsweise in Gegenwart eines Katalysators hergestellt wird aus mindestens einem Diisocyanat (a1) mit mindestens einer Verbindung der allgemeinen Formel I 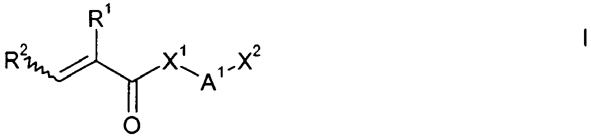 im Rahmen der vorliegenden Erfindung auch kurz Verbindung (a2) genannt, wobei die Variablen wie folgt definiert sind:
- R¹, R²: gleich oder verschieden und unabhängig voneinander gewählt aus Wasserstoff und C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
- X¹: gewählt aus Sauerstoff und N-R³,
- A¹: gewählt aus C₁-C₂₀-Alkylen, bevorzugt C₂-C₁₀-Alkylen, beispielsweise -CH₂-, -(CH₂)₁₂-, -(CH₂)₁₄-, -(CH₂)₁₆-, -(CH₂)₂₀-, bevorzugt -(CH₂)₂-, -(CH₂)₃-, -(CH₂)₄-, -(CH₂)₅-, -(CH₂)₆-, -(CH₂)₈-, -(CH₂)₁₀-, unsubstituiert oder ein- oder mehrfach substituiert mit C₁-C₄-Alkyl, beispielsweise Methyl, Ethyl, n-Propyl, iso-Propyl, n-Butyl, iso-Butyl, sec.-Butyl oder tert.-Butyl, bevorzugt Methyl, Phenyl oder -O-C₁-C₄-Alkyl, beispielsweise ―O-CH₃, -O-C₂H₅, -O-n-C₃H₇, -O-CH(CH₃)₂, -O-n-C₄H₉, -O-iso-C₄H₉, -O-sec-C₄H₉, -O-C(CH₃)₃, an substituierten C₁-C₂₀-Alkylen seien beispielsweise genannt -CH(CH₃)-, -CH(C₂H₅)-, -CH(C₆H₅)-,-CH₂-CH(CH₃)-, cis- und trans-CH(CH₃)-CH(CH₃)-, -(CH₂)-C(CH₃)₂-CH₂-, -CH₂-CH(C₂H₅)-, -CH₂-CH(n-C₃H₇)-, -CH₂-CH(iso-C₃H₇)-, wobei in unsubstituiertem oder substituiertem C₁-C₂₀-Alkylen eine oder mehrere nicht-benachbarte CH₂-Gruppen durch Sauerstoff ersetzt sein können, beispielsweise -CH₂-O-CH₂-, -(CH₂)₂-O-(CH₂)₂-, -[(CH₂)₂-O]₂-(CH₂)₂-, -[(CH₂)₂-O]₃-(CH₂)₂-.
- X²: gewählt aus NH-R³ und bevorzugt Sauerstoff,
- R³: verschieden oder vorzugsweise gleich und gewählt aus Wasserstoff, Phenyl und C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl.

Ganz besonders bevorzugte Verbindungen der allgemeinen Formel I sind 2-Hydroxyethyl(meth)acrylat und 3-Hydroxypropyl(meth)acrylat, insbesondere 2-Hydroxyethyl(meth)acrylat.
Man kann Polyurethan in Abwesenheit oder vorzugsweise in Anwesenheit mindestens eines Katalysators herstellen.

Als Katalysatoren kommen beispielsweise alle in der Polyurethanchemie üblicherweise verwendeten Katalysatoren in Betracht.

Üblicherweise in der Polyurethanchemie verwendete Katalysatoren sind bevorzugt organische Amine, insbesondere tertiäre aliphatische, cycloaliphatische oder aromatische Amine, und Lewis-saure organische Metallverbindungen.

Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-derivate von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Zinks, Aluminiums, Zirkons, Mangans, Nickels und Cobalts sind möglich. Weitere geeignete Metallverbindungen werden von Blank et al. in Progress in Organic Coatings, 1999, 35, 19 ff. beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-, Zink- und Cobaltkatalysatoren sowie Cäsiumsalze können als hydrophile Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN-, OCN-, NO₂ , NO₃⁻, HCO₃⁻, CO₃²⁻, S²⁻, SH-, HSO₃⁻, SO₃²⁻, HSO₄⁻, SO₄²⁻, S₂O₂²⁻, S₂O₄²⁻, S₂O₅²⁻, S₂O₆²⁻, S₂O7²⁻, S₂O₈²⁻, H₂PO₂⁻, H₂PO₄⁻, HPO₄²⁻, PO₄³⁻, P₂O₇⁴⁻, (OCₙH₂ₙ₋₁)-, (CₙH₂ₙ₋₁O₂)-, (CₙH₂ₙ₋₃O₂)- sowie (Cₙ₊₁H₂ₙ₋₂O₄)²⁻, wobei n für die Zahlen 1 bis 20 steht.

Bevorzugt sind dabei Zink- und Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat, 2-Ethylhexanoat, n-Octanoat und Neodecanoat.

Als übliche organische Amine seien beispielhaft genannt: Triethylamin, 1,4-Diazabi-cyclo-[2,2,2]-octan, Tributylamin, Dimethylbenzylamin, N,N,N',N'-Tetramethylethylendiamin, N,N,N',N'-Tetramethylbutan-1,4-diamin, N,N,N',N'-Tetramethylhexan-1,6-diamin, Dimethylcyclohexylamin, Dimethyldodecylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)ether, N-Ethylmorpholin, N-Methylmorpholin, N-Cyclohexylmorpholin, 2-Dimethylaminoethoxyethanol, Dimethylethanolamin, Tetramethylhexamethylendiamin, Dimethylamino-N-methylethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, Tris-(N,N-dimethylaminopropyl)-s-hexahydrotriazin, Imidazole wie 1,2-Dimethylimidazol, 4-Chlor-2,5-dimethyl-1-(N-methylaminoethyl)imidazol, 2-Aminopropyl-4,5-dimethoxy-1-methylimidazol, 1-Amino-propyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol.

Bevorzugte organische Amine sind Trialkylamine mit unabhängig voneinander zwei C₁- bis C₄-Alkylresten und einem Alkyl- oder Cycloalkylrest mit 4 bis 20 Kohlenstoffatomen, beispielsweise Dimethyl-C₄-C₁₅-Alkylamin wie Dimethyldodecylamin oder Dimethyl-C₃-C₈-Cycloalkylamin. Ebenfalls bevorzugte organische Amine sind bicyclische Amine, die gegebenenfalls ein weiteres Heteroatom wie Sauerstoff oder Stickstoff enthalten können, wie beispielsweise 1,4-Diazabicyclo-[2,2,2]-octan.

Besonders bevorzugt setzt man Ammoniumacetat oder Triethylamin und ganz besonders bevorzugt N,N,N-Trimethyl-N-(2-hydroxypropyl)ammonium-2-ethylhexanoat ein.

Selbstverständlich können auch Gemische aus zwei oder mehreren der vorstehend genannten Verbindungen als Katalysatoren eingesetzt werden.

Besonders bevorzugt verwendet man solche Katalysatoren, gewählt aus den vorstehend genannten Verbindungen, welche in organischen Lösungsmitteln wie Aceton, Tetrahydrofuran (THF), N-Methylpyrrolidon und/oder N-Ethylpyrrolidon lösliche sind.

Katalysator setzt man vorzugsweise in einer Menge von 0,0001 bis 10 Gew.-%, besonders bevorzugt in einer Menge von 0,001 bis 5 Gew.-% ein, bezogen auf Diisocyanat (a1).

Man kann - je nach Beschaffenheit des Katalysators oder der Katalysatoren - den oder die Katalysatoren in fester oder flüssiger Form oder gelöst zusetzen. Geeignete Lösemittel sind mit Wasser nicht mischbare Lösungsmittel wie aromatische oder aliphatische Kohlenwasserstoffe wie beispielsweise Toluol, Ethylacetat, Hexan und Cyclohexan sowie Carbonsäureester wie beispielsweise Ethylacetat, weiterhin geeignete Lösemittel sind Aceton, THF und N-Methylpyrrolidon und N-Ethylpyrrolidon. Bevorzugt setzt man den oder die Katalysatoren in fester oder flüssiger Form und ganz besonders bevorzugt gelöst in organischen Lösungsmitteln wie Aceton, Tetrahydrofuran (THF), N-Methylpyrrolidon oder N-Ethylpyrrolidon zu.

Diisocyanat (a1) wählt man beispielsweise aus aliphatischen, aromatischen und cycloaliphatischen Diisocyanaten. Für aromatische Diisocyanate seien beispielhaft genannt: 2,4-Toluylendiisocyanat (2,4-TDI), 2,4'-Diphenylmethandiisocyanat (2,4'-MDI) und sogenannte TDI-Gemische (Gemische von 2,4-Toluylendiisocyanat und 2,6-Toluylendiisocyanat).

Als aliphatische Diisocyanate seien beispielhaft genannt: 1,4-Butylendiisocyanat, 1,12-Dodecamethylendiisocyanat, 1,10-Decamethylendiisocyanat, 2-Butyl-2-ethylpentamethylendiisocyanat, 2,4,4- oder 2,2,4-Trimethylhexamethylendüsocyanat und insbesondere Hexamethylendiisocyanat (HDI).

Als cycloaliphatische Diisocyanate seien beispielhaft genannt: Isophorondüsocyanat (IPDI), 2-Isocyanatopropylcyclohexylisocyanat, 2,4'-Methylenbis(cyclohexyl)-düsocyanat und 4-Methyl-cyclohexan-1,3-diisocyanat (H-TDI).

Weitere Beispiele von Isocyanaten mit Gruppen unterschiedlicher Reaktivität sind 1,3-Phenylendiisocyanat, 1,4-Phenylendiisocyanat, 1,5-Naphthylendiisocyanat, Diphenyldiisocyanat, Tolidindiisocyanat und 2,6-Toluylendiisocyanat.

Natürlich kann man Mischungen der vorstehend genannten Diisocyanate einsetzen.

Diisocyanat (a1) und Verbindung (a2) kann man in Molverhältnissen von beispielsweise 10:1 bis 1:1, bevorzugt 5:1 bis 5:4 einsetzen.

In einer Ausführungsform der vorliegenden Erfindung kann man Diisocyanat (a1) und Verbindung (a2) bei Temperaturen im Bereich von 20°C bis 150°C miteinander umsetzen, bevorzugt 50 bis 130°C.

In einer Ausführungsform der vorliegenden Erfindung kann man Diisocyanat (a1) und Verbindung (a2) in Lösungsmittel, vorzugsweise in einem organischen Lösungsmittel oder einem Gemisch von organischen Lösungsmitteln wie beispielsweise Toluol, Aceton oder Tetrahydrofuran oder Mischungen der vorgenannten Lösungsmittel. In einer anderen Ausführungsform der vorliegenden Erfindung verzichtet man bei der Umsetzung von Diisocyanat (a1) mit Verbindung (a2) auf den Einsatz von Lösungsmittel.

In einer Ausführungsform der vorliegenden Erfindung wählt man bei der Umsetzung von Diisocyanat (a1) mit Verbindung (a2) die Reaktionsbedingungen, beispielsweise die Molverhältnisse von Diisocyanat (a1) und Verbindung (a2), so, dass Diisocyanat (a) 2 Isocyanatgruppen und 1 bis 10 Allophanatgruppen und 1 bis 10 C-C-Doppelbindungen, aber keine O-CO-NH-Gruppen aufweist. In einer anderen Ausführungsform der vorliegenden Erfindung wählt man bei der Umsetzung von Diisocyanat (a1) mit Verbindung (a2) die Reaktionsbedingungen, beispielsweise die Molverhältnisse von Diisocyanat (a1) und Verbindung (a2), so, dass Diisocyanat (a) 2 Isocyanatgruppen und 1 bis 9 Allophanatgruppen und 1 bis 9 C-C-Doppelbindungen und außerdem eine oder mehrere O-CO-NH-Gruppen aufweist.

Man kann nach beendeter Umsetzung von Diisocyanat (a1) mit Verbindung (a2) Di - oder Polyisocyanat (a) isolieren, beispielsweise durch Abtrennen von nicht umgesetzten Ausgangsmaterialien wie Diisocyanat (a1) oder Verbindung (a2). Eine geeignete Methode der Abtrennung von nicht umgesetzten Ausgangsmaterialien wie Diisocyanat (a1) und Verbindung (a2) ist das Abdestillieren, vorzugsweise bei vermindertem Druck. Ganz besonders geeignet sind Dünnschichtverdampfer. Bevorzugt verzichtet man auf das Abdestillieren von nicht umgesetztem Diisocyanat (a1).

In einer Ausführungsform der vorliegenden Erfindung hat Di- oder Polyisocyanat (a) eine dynamische Viskosität bei 23° im Bereich von 500 bis 2000 mPa·s, bevorzugt 600 bis 1800 mPa·s, ganz besonders bevorzugt 700 bis 1500 mPa·s.

In einer Ausführungsform der vorliegenden Erfindung hat Di- oder Polyisocyanat (a) einen NCO-Gehalt im Bereich von 8 bis 20 Gew.-%, bevorzugt 12 bis 17 Gew.-%, bestimmbar beispielsweise durch Titration.

Zur Darstellung von Polyurethan (A) kann man Di- oder Polyisocyanat (a) mit mindestens einem weiteren Di- oder Polyisocyanat (b) umsetzen. Di- oder Polyisocyanat (b) kann man aus den oben genannten aliphatischen, aromatischen und cycloaliphatischen Diisocyanaten wählen.

In einer Ausführungsform der vorliegenden Erfindung wählt man Di- oder Polyisocyanat (b) so, dass es von Diisocyanat (a1) verschieden ist.

In einer Ausführungsform der vorliegenden Erfindung wählt man Di- oder Polyisocyanat (b) so, dass es gleich Diisocyanat (a1) ist. In einer speziellen Ausführungsform der vorliegenden Erfindung geht man so vor, dass man Di- oder Polyisocyanat (b) gleich Diisocyanat (a1) wählt, indem man nach beendeter Herstellung von Di- oder Polyisocyanat (a) nicht von nicht verbrauchtem Diisocyanat (a1) abtrennt.

Zur Darstellung von Polyurethan (A) setzt man mit mindestens einer Verbindung mit mindestens zwei mit Isocyanat zur Reaktion befähigten Gruppen (c) um, die im Rahmen der vorliegenden Erfindung auch als Verbindung (c) bezeichnet wird. Besonders gut zur Reaktion mit Isocyanat befähigte Gruppen sind beispielsweise die SH-Gruppe, die Hydroxylgruppe, die NH₂-Gruppe und die NHR³-Gruppe, in der R³ wie oben genannt definiert ist.

Verbindung (c) kann hydrophil oder hydrophob sein.

Vorzugsweise wählt man mindestens eine Verbindung (c) aus 1,1,1-Trimethylol-C₁-C₄-Alkylcarbonsäuren, beispielsweise 1,1,1-Trimethylolessigsäure, 1,1,1-Trimethylolpropansäure, 1,1,1-Trimethylolbuttersäure, Zitronensäure,
2,2-Dimethylol-C₁-C₄-Alkylcarbonsäuren, beispielsweise 2,2-Dimethylolessigsäure,
2,2-Dimethylolpropansäure, 2,2-Dimethylolbuttersäure,
2,2-Dimethylol-C₁-C₄-Alkylsulfonsäuren,
Poly-C₂-C₃-alkylenglykolen mit im Mittel 3 bis 300 Alkylenoxideinheiten pro Molekül, insbesondere Polyethylenglykol mit im Mittel (Zahlenmittel) 3 bis 300 Ethylenoxideinheiten pro Molekül und Polyadditionsprodukte von Ethylenoxid und Propylenoxid mit im Mittel (Zahlenmittel) 3 bis 300 Ethylenoxideinheiten pro Molekül und einem molaren Anteil von Ethylenoxid, der höher ist als er Anteil an Propylenoxid;
hydrophile Diamine mit COOM- oder SO₃M-Gruppen, beispielsweise 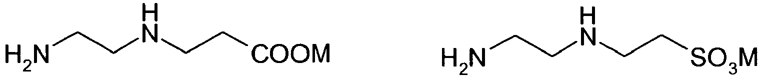 wobei M jeweils gewählt wird aus Alkalimetallionen, insbesondere Na⁺, und Ammoniumionen,

Polyesterdiolen, die herstellbar sind durch Polykondensation von
mindestens einem aliphatischen oder cycloaliphatischen Diol, bevorzugt Ethylenglykol, 1,4-Butandiol, 1,6-Hexandiol, cis- und trans-1,4-Cyclohexandiol, cis- und trans-1,4-Dihydroxymethylcyclohexan (Cylohexandimethanol),
mit mindestens einer aliphatischen, aromatischen oder cycloaliphatischen Dicarbonsäure, beispielsweise Bernsteinsäure, Glutarsäure, Adipinsäure, Cyclohexan-1,4-dicarbonsäure, Terephthalsäure, Isophthalsäure.

In einer Ausführungsform der vorliegenden Erfindung wählt man mindestens zwei Dicarbonsäuren zur Herstellung von Polyesterdiol, von denen eine aromatisch und die andere aliphatisch ist, beispielsweise Bernsteinsäure und Isophthalsäure, Glutarsäure und Isophthalsäure, Adipinsäure und Isophthalsäure, Bernsteinsäure und Terephthalsäure, Glutarsäure und Terephthalsäure, Adipinsäure und Terephthalsäure.

Wünscht man zur Herstellung von Polyesterdiol zwei oder mehr Dicarbonsäuren einzusetzen, so kann man beliebige Molverhältnisse wählen. Wünscht man eine aromatische und eine aliphatische Dicarbonsäure einzusetzen, so ist ein Molverhältnis im Bereich von 10 : 1 bis 1 : 10 bevorzugt, besonders ist ein Molverhältnis im Bereich von 1,5 : 1 bis 1 : 1,5.

In einer Ausführungsform der vorliegenden Erfindung haben als Verbindung (c) eingesetzte Polyesterdiole eine Hydroxylzahl im Bereich von 20 bis 200 mg KOH/g, bevorzugt 50 bis 180 ganz besonders bevorzugt 100 bis 160 mg KOH/g, bestimmt nach DIN 53240.

In einer Ausführungsform der vorliegenden Erfindung haben als Verbindung (c) eingesetzte Polyesterdiole ein Molekulargewicht M_{w} im Bereich von 500 bis 100.000 g/mol, bevorzugt 700 bis 50.000 g/mol, besonders bevorzugt bis 30.000 g/mol.

Weitere geeignete Verbindungen (c) sind Ethanolamin, Diethanolamin, Neopentylglycol, 1,4-Butandiol, 1,6-Hexandiol, 1,1-Dimethylolpropan.

In einer Ausführungsform der vorliegenden Erfindung setzt man mit mindestens zwei Verbindungen (c) um, von denen eine gewählt wird aus Ethanolamin, Diethanolamin, Neopentylglycol, 1,4-Butandiol, 1,6-Hexandiol, 1,1-Dimethylolpropan.

In einer Ausführungsform der vorliegenden Erfindung kann man zur Synthese von Polyurethan (A)
(a) weiterhin mindestens eine Verbindung der allgemeinen Formel I zusetzen, und zwar bei der Umsetzung von

Di- oder Polyisocyanat (a), und weiterem Di- oder Polyisocyanat (b), so vorhanden, mit Verbindung (c).

Verbindungen der Formel I sind vorstehend beschrieben.

Dabei kann man als Verbindung (d) der allgemeinen Formel I eine andere Verbindung der allgemeinen Formel I einsetzen als zur Herstellung von Di- oder Polyisocyanat (a), das im Mittel 1 bis 10 Allophanatgruppen und im Mittel 1 bis 10 C-C-Doppelbindungen pro Molekül enthält, eingesetzt. Vorzugsweise sind jedoch Verbindung (d) und Verbindung (a2) identisch.

Zur Durchführung der Synthese von Polyurethan (A) kann man nach an sich bekannten Methoden der Polyurethanchemie vorgehen.

Erfindungsgemäße wässrige Dispersionen enthalten weiterhin mindestens einen Polymerisationsinhibitor (C), auch Inhibitor (C) oder Stabilisator (C) genannt. Polymerisationsinhibitoren (C) kann man wählen aus UV-Absorbern und Radikalfängern. UV Absorber wandeln UV-Strahlung in Wärmeenergie um. Geeignete UV-Absorber sind z.B. Oxanilide, Triazine und Benzotriazol (letztere erhältlich als Tinuvin®-Marken der Ciba-Spezialitätenchemie), Benzophenone, Hydroxybenzophenone, Hydroquinon, Hydroquinonmonoalkylether wie z.B. Hydroquinonmonomethylether (MEHQ). Radikalfänger binden intermedär gebildete Radikale. Geeignete Radikalfänger sind beispielsweise sterisch gehinderte Amine, welche als HALS (Hindered Amine Light Stabilizers) bekannt sind. Beispiele dafür sind 2,2,6,6-Tetramethylpiperidin, 2,6-Di-tert.-butylpiperidin oder deren Derivaten, z. B. Bis-(2,2,6,6-tetra-methyl-4-piperidyl)sebacinat. Weitere geeignete Polymerisationsinhibitoren (C) sind substituierte Phenole, insbesondere mit tert.-Alkylresten substituierte Phenole wie beispielsweise

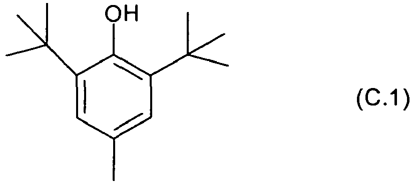

In einer Ausführungsform der vorliegenden Erfindung setzt man ein Gemisch von mehreren Polymerisationsinhibitoren (C) ein, beispielsweise einen Hydroquinonether und ein substituiertes Phenol.

Beispielsweise kann man insgesamt bis zu 15 Gew.-%, bezogen auf die Summe an (A) und (B), an Polymerisationsinhibitor (C) zusetzen, besonders bevorzugt 0,1 bis 1 Gew.-%.

Man kann Polymerisationsinhibitor (C) bereits während der Synthese von Polyurethan (A) zusetzen oder nachträglich, beispielsweise beim Dispergieren von Pigment (B).

In einer Ausführungsform der vorliegenden Erfindung kann man Di- oder Polyisocyanat (a), weiteres Di- oder Polyisocyanat (b) und Verbindung (c) und gegebenenfalls weiterer Verbindung der allgemeinen Formel I (d) in folgenden Gewichtsverhältnissen einsetzen, jeweils bezogen auf gesamtes Polyurethan (A):
15 bis 70 Gew.-%, bevorzugt 30 bis 60 Gew.-% Gew.-% Di- oder Polyisocyanat (a), null bis 60 Gew.-%, bevorzugt bis 20 Gew.-% weiteres Di- oder Polyisocyanat (b),
5 bis 50 Gew.-%, bevorzugt 30 bis 50 Gew.-% Verbindung (c),
null bis 20 Gew.-%, bevorzugt bis 10 Gew.-% Verbindung der allgemeinen Formel I (d).

Dabei sind Angaben in Gew.-% jeweils auf gesamtes Polyurethan (A) bezogen.

In einer bevorzugten Variante der vorliegenden Erfindung setzt man zur Herstellung von Polyisocyanat (A) neben Di- oder Polyisocyanat (a), weiterem Di- oder Polyisocyanat (b) und Verbindung (c) und gegebenenfalls weiterer Verbindung der allgemeinen Formel I (d) noch mit mindestens einem nucleophilen Alkohol oder Amin, vorzugsweise Monoalkohol oder Monoamin, um, das bzw. der auch als Stopper dienen kann und im Folgenden als Stopper (e) bezeichnet wird. Beispiele für geeignete Stopper (e) sind Mono- und Di-C₁-C₄-alkylamine, insbesondere Diethylamin und N,N-Diethanolamin. Man kann bis zu 10 Gew.-% Stopper (e) einsetzen, bezogen auf zu synthetisierendes Polyurethan (A).

Man kann die Herstellung von Polyurethan (A) aus Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) in einer Stufe oder in mehreren Stufen durchführen. Beispielsweise kann man Di- oder Polyisocyanat (a), weiteres Di- oder Polyisocyanat (b) und Verbindung (c) in einer ersten Stufe umsetzen, vorzugsweise unter Verwendung eines Katalysators, die Reaktion abstoppen und danach erneut Di- oder Polyisocyanat (b) und Verbindung der allgemeinen Formel I (d) und gegebenenfalls Stopper (e) zugeben. Es ist beispielsweise auch möglich, Di- oder Polyisocyanat (a), weiteres Di- oder Polyisocyanat (b) und Verbindung (c) miteinander umzusetzen, wobei man einen Überschuss an weiterem Di- oder Polyisocyanat (b) wählt, und die Reaktion durch Zugabe von Stopper (e) zu stoppen.

In einer Ausführungsform der vorliegenden Erfindung kann man Di- oder Polyisocyanat (a), weiteres Di- oder Polyisocyanat (b), Verbindung (c) und gegebenenfalls weitere Verbindung der allgemeinen Formel I (d) und gegebenenfalls Stopper (e) in Lösungsmittel, vorzugsweise in einem organischen Lösungsmittel oder einem Gemisch von organischen Lösungsmitteln wie beispielsweise Toluol, Aceton oder Tetrahydrofuran oder Mischungen der vorgenannten Lösungsmittel umsetzen. In einer anderen Ausführungsform der vorliegenden Erfindung verzichtet man bei der Umsetzung von Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) auf den Einsatz von Lösungsmittel.

In einer Ausführungsform der vorliegenden Erfindung kann man Di- oder Polyisocyanat (a), weiteres Di- oder Polyisocyanat (b) und Verbindung (c) und gegebenenfalls weiterer Verbindung der allgemeinen Formel I (d) und gegebenenfalls Stopper (e) bei Temperaturen im Bereich von 20°C bis 150°C miteinander umsetzen, bevorzugt 20 bis 80°C.

Zur Beschleunigung der Umsetzung von Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) kann man einen oder mehrere Katalysatoren einsetzen, den bzw. die man vorteilhaft aus den vorstehend genannten Katalysatoren wählt.

Man kann nach beendeter Umsetzung von Di- oder Polyisocyanat (a), weiterem Di - oder Polyisocyanat (b), Verbindung (c) und gegebenenfalls weiterer Verbindung der allgemeinen Formel I (d) und gegebenenfalls Stopper (e) Polyurethan (A) isolieren, beispielsweise durch Abtrennen von nicht umgesetzten Ausgangsmaterialien wie Di - oder Polyisocyanat (b), Verbindung (c) und gegebenenfalls weiterer Verbindung der allgemeinen Formel I (d) und gegebenenfalls Stopper (e). Eine geeignete Methode der Abtrennung von nicht umgesetzten Ausgangsmaterialien wie (b) und (c) und gegebenenfalls (d) und (e) ist das Abdestillieren, vorzugsweise bei vermindertem Druck. Ganz besonders geeignet sind Dünnschichtverdampfer. Bevorzugt verzichtet man auf das Abdestillieren von nicht umgesetztem Di- oder Polyisocyanat (b).

Das Molekulargewicht M_{w} der Polyurethane (A) kann beispielsweise 500 bis maximal 50.000 g/mol betragen, bevorzugt 1.000 bis 30.000 g/mol, besonders bevorzugt 2.000 bis 25.000 g/mol und ganz besonders bevorzugt mindestens 2.000 g/mol, bestimmt beispielsweise durch Gelpermeationschromatographie (GPC).

In einer bevorzugten Ausführungsform der vorliegenden Erfindung enthält Polyurethan (A) keine freien NCO-Gruppen.

Nach erfolgter Umsetzung von Di- oder Polyisocyanat (a), weiterem Di- oder Polyisocyanat (b) und Verbindung (c) und gegebenenfalls (d) und gegebenenfalls Stopper (e) kann man Wasser zugeben, beispielsweise in einem Gewichtsverhältnis Polyurethan (A) zu Wasser im Bereich von 1 : 1 bis 1 : 10.

Nach erfolgter Umsetzung von Di- oder Polyisocyanat (a), weiterem Di- oder Polyisocyanat (b) und Verbindung (c) und gegebenenfalls (d) und Stopper (e) kann man Gruppen, die über ausreichend acide H-Atome verfügen, durch Behandlung mit Basen in die entsprechenden Salze überführen. Gut geeignete Basen sind beispielsweise Hydroxide und Hydrogencarbonate von Alkalimetallen oder Erdalkalimetallen oder die Carbonate von Alkalimetallen. Weitere gut geeignete Basen sind flüchtige Amine, d.h. Amine mit einem Siedepunkt bis 180°C bei Atmosphärendruck, wie beispielsweise Ammoniak, Methylamin, Dimethylamin, Trimethylamin, Ethylamin, Diethylamin, Triethylamin, Ethanolamin, N-Methyldiethanolamin oder Triethanolamin. Analog lassen sich basische Gruppen mit Säuren wie beispielsweise α-Hydroxycarbonsäuren oder α-Aminosäuren oder auch α-Hydroxysulfonsäuren in die entsprechenden Salze überführen.

Nach erfolgter Umsetzung von Di- oder Polyisocyanat (a), weiterem Di- oder Polyisocyanat (b) und Verbindung (c) gegebenenfalls (d) und Stopper (e) kann man eventuell eingesetztes organisches Lösungsmittel abtrennen, beispielsweise durch Destillation.

Im Anschluss an die Herstellung von Polyurethan (A) gibt man optional ein oder mehrere Pigmente (B) und gegebenenfalls Wasser zu. Vorzugsweise stellt man einen Feststoffgehalt im Bereich von bis 10 bis 80%, bevorzugt bis 65%, besonders bevorzugt 40 bis 60% ein.

Das Gewichtsverhältnis von Polyurethan (A) zu Pigment (B) kann man in weiten Grenzen variieren. In einer Ausführungsform der vorliegenden Erfindung liegt das Gewichtsverhältnis von Polyurethan (A) zu Pigment (B) in einem Bereich von 5:1 bis 1:10, bevorzugt 3:1 bis 1:8, besonders bevorzugt 1:1 bis 1:6.

Anschließend dispergiert man Polyurethan (A) und Pigment (B). Das Dispergieren kann man in beliebigen zum Dispergieren geeigneten Apparaten durchführen. Beispielhaft seien Schüttelapparaturen wie z.B. der Fa. Skandex genannt. Bevorzugt dispergiert Polyurethan (A) und Pigment (B) beispielsweise in Ultraschallapparaturen, Hochdruckhomogenisatoren, 2-, 3-, 4- oder 5-Walzenmühlen, Minimühlen, Henschelmischern, Schüttelmühlen, Angmühlen, Zahnmühlen, Perlmühlen, Nassmühlen, Sandmühlen, Attritoren, Kolloidmühlen, Ultraschallhomogenisatoren, mit Ultra-Turrax-Rührer und insbesondere durch Mahlung, beispielsweise in 2-, 3-, 4- oder 5-Walzenmühlen, Minimühlen, Schüttelmühlen, Angmühlen, Zahnmühlen, Perlmühlen, Nassmühlen, Sandmühlen, Kolloidmühlen, Kugelmühlen, speziell Rührwerkskugelmühlen.

Als geeignete Zeitdauer für das Dispergieren haben sich beispielsweise 10 Minuten bis 48 Stunden erwiesen, obwohl auch eine längere Zeitdauer denkbar ist. Bevorzugt ist eine Zeitdauer für das Dispergieren von 15 Minuten bis 24 Stunden.

Druck- und Temperaturbedingungen beim Dispergieren sind im Allgemeinen unkritisch, so hat sich beispielsweise Normaldruck als geeignet erwiesen. Als Temperaturen haben sich beispielsweise Temperaturen im Bereich von 10°C bis 100°C als geeignet erwiesen, bevorzugt bis 80°C.

Durch das Dispergieren erhält man erfindungsgemäße wässrige Dispersion. In einer Ausführungsform der vorliegenden Erfindung weisen erfindungsgemäße wässrige Dispersionen einen Feststoffgehalt im Bereich von 10 bis 80%, bevorzugt bis 65%, besonders bevorzugt 40 bis 60% auf.

Während der Durchführung des Dispergierens kann man übliche Mahlhilfsmittel zusetzen.

Der mittlere Durchmesser von zumindest partiell mit Polyurethan (A) umhüllten Pigment (B) liegt nach dem Dispergieren üblicherweise im Bereich von 20 nm bis 1,5 µm, bevorzugt im Bereich von 60 bis 500 nm, besonders bevorzugt im Bereich von 60 bis 350 nm und bezeichnet im Zusammenhang mit der vorliegenden Erfindung allgemein das Volumenmittel. Geeignete Messgeräte zur Bestimmung des mittleren Partikeldurchmessers sind beispielsweise Coulter Counter, z.B. Coulter LS 230.
Wünscht man Ruß erfindungsgemäß als Pigment (B) einzusetzen, so bezieht sich der Partikeldurchmesser auf den mittleren Durchmesser der Primärpartikel.

Erfindungsgemäße wässrige Dispersionen enthalten keinen thermischen Initiator, d.h. keine Verbindung, die bei 60°C eine Halbwertszeit von mindestens einer Stunde aufweist und dabei in freie Radikale zerfällt, wie beispielsweise Peroxide, Hydroperoxide, Wasserstoffperoxid, Persulfate, Azoverbindungen wie beispielsweise Azobisisobutyronitril (AIBN) oder wasserlösliche AIBN-Derivate, hochsubstituierte, insbesondere hexasubstituierte Ethanderivate oder Redoxkatalysatoren.

In einer Ausführungsform der vorliegenden Erfindung enthalten erfindungsgemäße wässrige Dispersionen mindestens ein Polyurethan (D). Polyurethan (D) ist beispielsweise erhältlich durch Umsetzung von Di- oder Polyisocyanat (b) mit Verbindung (c), enthält aber vorzugsweise keine Allophanatgruppen. Besonders bevorzugt ist Pigment (B) nicht nur mit Polyurethan (A) zumindest partiell umhüllt, sondern auch mit Polyurethan (D).

In einer Ausführungsform der vorliegenden Erfindung enthalten erfindungsgemäße wässrige Dispersionen Polyurethan (A) und Polyurethan (D) im Bereich von 10 : 1 bis 1 : 2, bevorzugt im Bereich von 8 : 1 bis 1 : 1 (Gewichtsverhältnis).

In einer Ausführungsform der vorliegenden Erfindung enthalten erfindungsgemäße wässrige Dispersionen mindestens einen Photoinitiator (E). Photoinitiator (E) kann man entweder vor dem Dispergieren oder aber nach dem Dispergieren zusetzen.

Geeignete Photoinitiatoren (E) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 0 007 508, EP-A 0 057 474, DE-A 196 18 720, EP-A 0 495 751 und EP-A 0 615 980 beschrieben sind, beispielsweise 2,4,6-Trimethylbenzoyldiphenylphosphinoxid, Ethyl-2,4,6-trimethylbenzoylphenylphosphinat, Bis-(2,4,6-trimethylbenzoyl)-phenylphosphin-oxid, Benzophenon, Hydroxyacetophenon, Phenylglyoxylsäure und ihre Derivate oder Gemische der vorstehend genannten Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzointetrahydropyranylether, Benzoin-methylether, Benzoin-ethylether, Benzoin-butylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-tert-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugte Photoinitiatoren (E) sind beispielsweise solche Photoinitiatoren, die bei Aktivierung zerfallen, sogenannte α-Zerfaller wie beispielsweise Photoinitiatoren vom Benzildialkylketal-Typ wie z.B. Benzildimethylketal. Weitere Beispiele für geeignete α-Zerfaller sind Derivate von Benzoin, Isobutylbenzoinether, Phosphinoxide, insbesondere Mono- und Bisacylphosphinoxide, z.B. Benzoyldiphenylphosphinoxid, 2,4,6-Trimethylbenzoyldiphenylphosphinoxid, α-Hydroxyalkylacetophenone wie z.B. 2-Hydroxy-2-methylphenylpropanon (E.1), 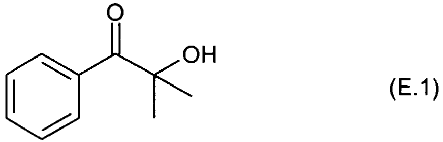 2-Hydroxy-1-[-4-(2-hydroxyethoxy)phenyl]-2-methyl-1-propanon (E.2)

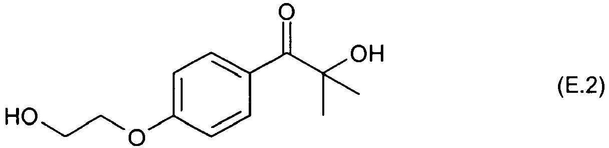

Phosphinsulfide und Ethyl-4-dimethylaminobenzoat sowie (E.3)

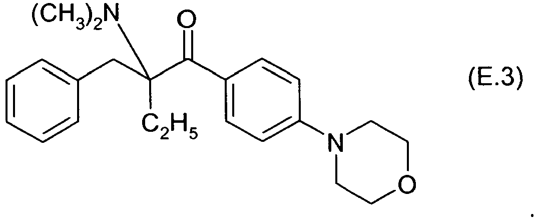

Weitere Beispiele für bevorzugte Photoinitiatoren (E) sind Wasserstoff-abstrahierende Photoinitiatoren, beispielsweise vom Typ der gegebenenfalls substituierten Acetophenone, Anthrachinone, Thioxanthone, Benzoesäureester oder der gegebenenfalls substituierten Benzophenone. Besonders bevorzugte Beispiele sind Isopropylthioxanthon, Benzophenon, Phenylbenzylketon, 4-Methylbenzophenon, halogenmethylierte Benzophenone, Anthron, Michlers Keton (4,4'-bis-N,N-dimethylaminobenzophenon), 4-Chlorbenzophenon, 4,4'-Dichlorbenzophenon, Anthrachinon.

In einer Ausführungsform der vorliegenden Erfindung setzt man erfindungsgemäßen wässrigen Dispersionen so viel Photoinitiator (E) zu, dass das Gewichtsverhältnis von Polyurethan (A) zu Photoinitiator (E) in einem Bereich von 2 : 1 bis 5.000 : 1, bevorzugt von 3 : 1 bis 1.000 : 1, ganz besonders bevorzugt in einem Gewichtsverhältnis von 5 : 1 bis 500 : 1 liegt.

Die Wirksamkeit von Photoinitiatoren (E) in erfindungsgemäßen wässrigen Dispersionen kann man, wenn es gewünscht wird, durch die Zugabe von mindestens einem Synergisten, beispielsweise von mindestens einem Amin, insbesondere von mindestens einem tertiärem Amin erhöhen. Geeignete Amine sind beispielsweise Triethylamin, N,N-Dimethylethanolamin, N-Methylethanolamin, Triethanolamin, Aminoacrylate wie beispielsweise aminmodifizierte Polyetheracrylate. Wenn man Amine wie beispielsweise tertiäre Amine als Katalysator bei der Synthese von Polyurethan (A) eingesetzt und nach der Synthese nicht abgetrennt hat, so kann auch als Katalysator verwendetes tertiäres Amin als Synergist wirken. Weiterhin kann zur Neutralisation von sauren Gruppen wie beispielsweise COOH-Gruppen oder SO₃H-Gruppen eingesetztes tertiäres Amin als Synergist wirken. Man kann bis zur doppelten molaren Menge Synergist zusetzen, bezogen auf eingesetzen Photoinitiator (E).

Man kann erfindungsgemäßen Dispersionen eine oder mehrere weitere Verbindungen mit C-C-Doppelbindungen (F) zusetzen, im folgenden auch als ungesättigte Verbindungen (F) bezeichnet.
Im einfachsten Fall setzt man den Pigmentdispersionen weitere doppelbindungshaltige Polyurethane (A) zu.

Besonders geeignete ungesättigte Verbindungen (F) sind beispielsweise Verbindungen der allgemeinen Formel I. Weitere besonders geeignete ungesättigte Verbindungen (F) sind solche der allgemeinen Formel F.1.

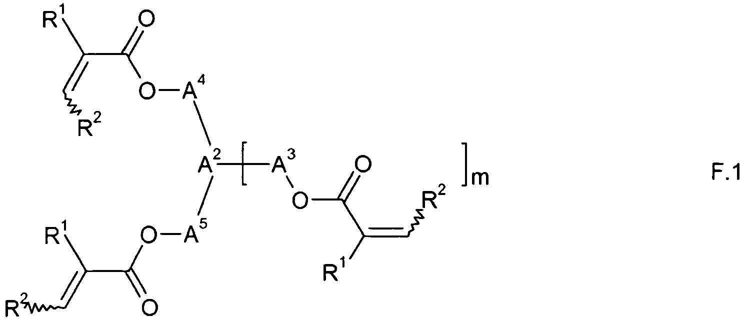

Dabei sind die Variablen wie folgt definiert:
- R¹, R²: gleich oder verschieden und unabhängig voneinander gewählt aus Wasserstoff und C₁-C₁₀-Alkyl,
- m: eine ganze Zahl von 0 bis 2, bevorzugt 1;
- A²: CH₂ oder -CH₂-CH₂- oder R⁸-CH oder para-C₆H₄ für den Fall, dass m = 0, CH, C-OH, C-O-C(O)-CH=CH₂ C-O-CO-C(CH₃)=CH₂, R⁸-C oder 1,3,5-C₆H₃ für den Fall, dass m = 1, und Kohlenstoff für den Fall, dass m = 2;
- R⁸: gewählt aus C₁-C₄-Alkyl, wie beispielsweise n-C₄H₉, n-C₃H₇, iso-C₃H₇ und vorzugsweise C₂H₅ und CH₃, oder Phenyl,
- A³, A⁴, A⁵: gleich oder verschieden und gewählt aus C₁-C₂₀-Alkylen, wie beispielsweise -CH₂-, -CH(CH₃)-, -CH(C₂H₅)-, -CH(C₆H₅)-, -(CH₂)₂-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -CH(CH₃)-(CH₂)₂-CH(CH₃)-;
cis- oder trans-C₄-C₁₀-Cycloalkylen, wie beispielsweise cis-1,3-Cyclopentyliden, trans-1,3-Cyclopentyliden cis-1,4-Cyclohexyliden, trans-1,4-Cyclohexyliden;
C₁-C₂₀-Alkylen, in denen von einem bis zu sieben jeweils nicht benachbarte C-Atome durch Sauerstoff ersetzt sind, wie beispielsweise -CH₂-O-CH₂-, -(CH₂)₂-O-CH₂-, -(CH₂)₂-O-(CH₂)₂-, -[(CH₂)₂-O]₂-(CH₂)₂-, -[(CH₂)₂-O]₃-(CH₂)₂-;
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sind, wie beispielsweise -CH₂-O-CH₂-CH(OH)-CH₂-, -CH₂-O-[CH₂-CH(OH)-CH₂]₂-, -CH₂-O-[CH₂-CH(OH)-CH₂]₃-;
C₆-C₁₄-Arylen, wie beispielsweise para-C₆H₄.

Besonders bevorzugte Beispiele für Verbindungen der allgemeinen Formel F.I sind Trimethylolpropantri(meth)acrylat, Tri(meth)acrylat von dreifach ethoxyliertem Trimethylolpropan, Pentaerythrittri(meth)acrylat und Pentaerythrittetra(meth)acrylat.

Weitere sehr gut geeignete Vertreter für ungesättigte Verbindungen (F) sind Ethylenglycoldi(meth)acrylat, Diethylenglykoldi(meth)acrylat, Triethylenglykoldi(meth)acrylat, Propylenglykol(meth)acrylat, Dipropylenglykoldi(meth)acrylat und Tripropylenglykoldi(meth)acrylat.

Weitere sehr gut geeignete Vertreter für ungesättigte Verbindungen (F) sind partiell oder erschöpfend (meth)acrylierte Polyole wie beispielsweise partiell oder erschöpfend (meth)acryliertes dimeres Trimethylolpropan, partiell oder erschöpfend (meth)acryliertes dimeres Trimethylolethan, partiell oder erschöpfend (meth)acrylierter dimerer Pentaerythrit.

Beispielsweise kann man insgesamt bis zu 100 Gew.-%, bezogen auf die Summe an (A) und (B), an ungesättigter Verbindung (F) zusetzen, bevorzugt bis zu 50 Gew.-% und besonders bevorzugt bis zu 25 Gew.-%.

Erfindungsgemäße wässrige Dispersionen lassen sich gut verwenden als oder zur Herstellung von Formulierungen zum Färben oder Bedrucken von Substraten, beispielsweise zur Herstellung von Färbeflotten für das Pigmentfärben oder zur Herstellung von Druckpasten für den Pigmentdruck. Ein Gegenstand der vorliegenden Erfindung ist daher die Verwendung von erfindungsgemäßen wässrigen Dispersionen als oder zur Herstellung von Formulierungen zum Färben oder Bedrucken von Substraten. Ebenso ist Gegenstand der vorliegenden Erfindung ein Verfahren zum Färben oder Bedrucken von Substraten unter Verwendung von mindestens einer erfindungsgemäßen wässrigen Dispersion.

Als Substrate sind geeignet:
Cellulosehaltige Materialien wie Papier, Pappe, Karton, Holz und Holzwerkstoffe, die auch lackiert oder anderweitig beschichtet sein können,
metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
silikatische Materialien wie Glas, Porzellan und Keramik, die beschichtet sein können, polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
Lebensmittel und Teile von Lebensmittel, insbesondere Eierschalen,
Leder, sowohl Naturleder als auch Kunstleder, als Glatt-, Nappa- oder Velourleder, Lebensmittel und Kosmetika, und insbesondere textile Substrate wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Mischgewebe wie beispielsweise Polyester/Polyurethan-Mischgewebe (z. B. Lycra®), Polyethylen-Polypropylen-Mischgewebe, Polyestermikrofasern und Glasfasergewebe.

Die Substrate können optional vorbehandelt und/oder vorbeschichtet sein, beispielsweise können Kunststofffolien vor Applikation mit Corona-Entladungen behandelt oder mit einer Grundierung (Primer) vorbeschichtet werden.

Unter den Kunststoffen sind insbesondere hervorzuheben Polycarbonat, Polyethylen, beispielsweise PE, HDPE, LDPE, Polypropylen, beispielsweise PP, orientiertes PP (OPP), bisaxial orientiertes PP (BOPP), Polyamid, beispielsweise Nylon®, und Polyethylenterephthalat (PET).

Bevorzugte Substrate sind Papier, darunter insbesondere Zeitungspapier, Pappe, Karton, Polyester enthaltende Folien, Polyethylen enthaltende Folien und Polypropylen enthaltende Folien sowie Glas. Kunststofffolien können optional auch metallisiert sein.

Erfindungsgemäße Druckfarben für Druckverfahren können weitere Zuschlagstoffe (G), wie sie insbesondere für wässrige Druckfarben und in der Druck- und Lackindustrie üblich sind, enthalten. Genannt seien z.B. Konservierungsmittel wie beispielsweise 1,2-Benzisothiazolin-3-on (kommerziell erhältlich als Proxel-Marken der Fa. Avecia Lim.) und dessen Alkalimetallsalze, Glutardialdehyd und/oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Netzmittel (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil erfindungsgemäßer Druckfarben für Druckverfahren sind, beträgt ihre Gesamtmenge in der Regel 2 Gew.-%, insbesondere 1 Gew.-%, bezogen auf das Gewicht der erfindungsgemäßen Farbmittelzubereitungen und insbesondere der erfindungsgemäßen Druckfarben für Druckverfahren.

Als Verbindungen (G) sind auch Styrol-Acrylat-Copolymere denkbar, bei denen es sich um durch radikalische Polymerisation erhältliche Copolymere handelt, die als Monomere in eingebauter Form enthalten können
(i) mindestens ein vinylaromatisches Monomer, bevorzugt ausgewählt aus der Gruppe bestehend aus Styrol und alpha-Methylstyrol, besonders bevorzugt Styrol,
(ii) Acrylsäure oder Methacrylsäure, bevorzugt Acrylsäure, sowie
(iii) optional mindestens einen C₁- bis C₈-Alkylester der Acrylsäure oder Methacrylsäure, in dieser Schrift als (Meth)acrylsäure bezeichnet, bevorzugt Acrylsäure,
(iv) optional andere als die unter (i) bis (iii) genannten Monomere, die radikalisch polymerisierbar sind, bevorzugt 2-Hydroxyethyl(meth)acrylat, Acrylnitril, Acrylamid.

Bevorzugte Monomere (iii) sind Methylacrylat, Ethylacrylat, n-Butylacrylat, 2-Ethylhexylacrylat, n-Octylacrylat, Methylmethacrylat, Ethylmethacrylat und n-Butylmethacrylat.

Derartige Copolymere können ein zahlenmittleres Molekulargewicht Mw, bestimmt per Gelpermeationschromatographie in THF als Lösungsmittel und Polystyrol als Standard, kann von 1.000 bis 1.500.000 aufweisen.

Üblicherweise sind sie wie folgt aufgebaut:
Monomere (i): 20-80 Gew% Styrol und/oder alpha-Methylstyrol
Monomere (il): 1-45 Gew% Acrylsäure und 0-10 Gew% Methacrylsäure und
Monomere (ill): 0-30 Gew% n-Butylacrylat, 0-30 Gew% 2-Ethylhexylacrylat.

Bevorzugt sind derartige Copolymere über Massepolymerisation und Emulsionspolymerisation erhältlich, besonders bevorzugt über Massepolymerisation.

Erfindungsgemäße Druckfarben für Druckverfahren können weiterhin einen weiteren Photoinitiator enthalten, der nicht gleich dem Photoinitiator (E) ist, der bei der Herstellung von erfindungsgemäßer wässriger Dispersion eingesetzt werden kann, aber aus den oben genannten Photoinitiatoren gewählt wird.

In einer Ausführungsform der vorliegenden Erfindung haben erfindungsgemäße Druckfarben für Druckverfahren eine dynamische Viskosität im Bereich von 10 bis 2000 mPa·s, bevorzugt 10 bis 1000 mPa·s, besonders bevorzugt 10 bis 500 mPa·s, und ganz besonders bevorzugt 10 bis 150 mPas, gemessen bei 23°C nach DIN 53018.

Zur Einstellung der Viskosität kann es erforderlich sein, der Druckfarbe zur Einstellung der Viskosität einen Verdicker zuzusetzen.

In einer Ausführungsform der vorliegenden Erfindung beträgt die Oberflächenspannung erfindungsgemäßer Druckfarben für Druckverfahren 25 bis 70 mN/m, insbesondere 30 bis 60 mN/m, gemessen bei 25°C nach DIN 53993.

In einer Ausführungsform der vorliegenden Erfindung liegt der pH-Wert erfindungsgemäßer Druckfarben für Druckverfahren bei 5 bis 10, vorzugsweise bei 7 bis 10.

Erfindungsgemäße Druckfarben für Druckverfahren zeigen insgesamt vorteilhafte Anwendungseigenschaften, gutes Trocknungsverhalten, und ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf gestrichenes und ungestrichenes Papier sowie Karton und PE/PP/PET Folien. Es stellt einen besonderen Vorteil der erfindungsgemäßen Druckfarben dar, daß sie eine verbesserte Wiederauflösung von auf Druckrollen bzw. Druckplatten haftenden Druckfarbresten zeigen, die aus einem vorhergehenden Druckvorgang stammen oder auch nach Unterbrechung des Druckvorganges angetrocknet sein können. Eine solche verbesserte Wiederauflösung ist insbesondere, aber nicht nur, beim Drucken nach dem Hochdruckverfahren vorteilhaft.
Ein weiterer Aspekt der vorliegenden Erfindung ist ein Verfahren zur Herstellung von erfindungsgemäßen Druckfarben für Druckverfahren. Das erfindungsgemäße Verfahren zur Herstellung von Druckfarben für Druckverfahren ist dadurch gekennzeichnet, dass man mindestens eine erfindungsgemäße wässrige Dispersion, Wasser und gegebenenfalls mindestens einen Zuschlagstoff (G) miteinander vermischt, beispielsweise in einem oder in mehreren Schritten.

Als geeignete Vermischungstechniken sind beispielsweise Verrühren und intensives Schütteln zu nennen sowie das Dispergieren, beispielsweise in Kugelmühlen oder Rührwerkskugelmühlen.

Die Reihenfolge der Zugabe bei dem Vermischen von erfindungsgemäßer wässriger Dispersion, Wasser, gegebenenfalls (C), gegebenenfalls (D), gegebenenfalls (E), gegebenenfalls (F) und gegebenenfalls (G) ist an sich unkritisch.

So ist es in einer bevorzugten Variante der vorliegenden Erfindung möglich, dass man zunächst mindestens ein Polyurethan (A) synthetisiert, danach mit Pigment (B) dispergiert und danach mit einem oder mehreren der gewünschten Zusätze zusätzliches (A), (C), (D), (E), (F) und/oder (G) vermischt und vor oder nach dem Vermischen mit Wasser verdünnt.

In einer Variante der vorliegenden Erfindung ist es möglich, dass man zunächst mindestens ein Polyurethan (A) synthetisiert, danach mit Pigment (B) dispergiert und danach mit einem oder mehreren der gewünschten Zusätze (C), (D), (E), (F) und/oder (G) vermischt und vor oder nach dem Vermischen mit Wasser verdünnt.

In einer anderen Variante der vorliegenden Erfindung synthetisiert man (a) mindestens ein Polyurethan (A) und mindestens ein Polyurethan (D), danach vermischt man mit Polymerisationsinhibitor (C) und dispergiert mit (B), verdünnt mit Wasser und vermischt gegebenenfalls mit einem oder mehreren der gewünschten Zusätze (E), (F) und/oder (G).

In einer anderen Variante der vorliegenden Erfindung synthetisiert man mindestens ein Polyurethan (A) in Gegenwart von Polymeriationsinhibitor (C) und dispergiert danach mit Pigment (B) und mindestens einem der gewünschten Zusätze Polyurethan (D) sowie (E), (F) und (G).

In einer anderen Variante der vorliegenden Erfindung synthetisiert man mindestens ein Polyurethan (A) und mindestens ein Polyurethan (D) in Gegenwart von Polymeristionsinhibitor (C) und dispergiert danach mit Pigment (B) und mindestens einem der gewünschten Zusätze (E), (F) und (G).

In einer weiteren Variante ist es möglich, dass man zunächst mindestens ein Styrol-Acrylat-Copolymer (G) synthetisiert, danach mit Pigment (B) dispergiert und danach mit mindestens einem Polyurethan (A) vermischt sowie optional mit einem oder mehreren der gewünschten Zusätze (C), (D), (E) und/oder (F) vermischt und vor oder nach dem Vermischen mit Wasser verdünnt.

Ein weiterer Aspekt der vorliegenden Erfindung ist ein Verfahren zum Bedrucken von flächigen oder dreidimensionalen, bevorzugt flächigen Substraten nach einem Druckverfahren ausgewählt aus der Gruppe bestehend aus Offsetdruck, Hochdruck, Flexodruck, Gravurdruck und Tiefdruck unter Verwendung von mindestens einer erfindungsgemäßen Druckfarbe. In einer bevorzugten Variante des erfindungsgemäßen Druckverfahrens druckt man mindestens eine erfindungsgemäße Druckfarbe auf ein Substrat und behandelt anschließend mit aktinischer Strahlung.

Druckverfahren, in denen die erfindungsgemäßen Druckfarben eingesetzt werden können sind Offsetdruck, Hochdruck, Flexodruck, Gravurdruck und Tiefdruck, besonders bevorzugt Flexodruck und Gravurdruck.

Bei den sogenannten mechanischen Druckverfahren wie Offsetdruck, Hochdruck, Flexodruck oder Tiefdruck wird die Druckfarbe durch Kontakt einer mit Druckfarbe versehenen Druckplatte oder Druckform mit dem Bedruckstoff auf den Bedruckstoff übertragen. Druckfarben für diese Anwendungen umfassen üblicherweise Lösemittel, Farbmittel Bindemittel sowie ggf. verschiedene Additive. Bindemittel dienen zur Bildung des Farbfilms und der Verankerung der Bestandteile wie beispielsweise Pigmente oder Füllstoffe im Farbfilm. Je nach Konsistenz enthalten Druckfarben für diese Anwendungen üblicherweise zwischen 10 und 50 Gew. % Bindemittel.

Drucklacke werden entweder als Grundierung auf den Bedruckstoff aufgetragen (sogenannte "primer") oder nach dem Druckvorgang als Überzug auf den bedruckten Bedruckstoff aufgetragen. Drucklacke werden beispielsweise zum Schutz des Druckbildes, zur Verbesserung der Haftung der Druckfarbe auf dem Bedruckstoff oder zu ästhetischen Zwecken eingesetzt. Die Auftragung erfolgt üblicherweise in-line mittels eines Lackierwerkes an der Druckmaschine.

Drucklacke enthalten kein Farbmittel, sind aber abgesehen davon im Regelfalle ähnlich wie Druckfarben zusammengesetzt.

Druckfarben für mechanische Druckverfahren umfassen so genannte pastöse Druckfarben mit hoher Viskosität für den Offset-und Hochdruck sowie so genannte Flüssigdruckfarben mit vergleichsweise niedriger Viskosität für den Flexo- und Tiefdruck.

In einer bevorzugten Ausführungsform der vorliegenden Erfindung kann der flexographische Druckvorgang beispielsweise so erfolgen, daß das zu beschichtende, optional vorbehandelte Substrat an einzelnen Druckstationen nacheinander mit unterschiedlich pigmentierten erfindungsgemäßen Druckfarben bedruckt wird. Zwischen den einzelnen Druckstationen erfolgt bevorzugt eine zumindest teilweise Trocknung, besonders bevorzugt eine vollständige Trocknung.

Bevorzugt sind die einzelnen Druckstationen samt Trocknungsstationen um eine zentrale Walze herum angeordnet, es ist aber auch möglich, das Substrat in jeder einzelnen Druckstation über Umlenker über jeweils eine Walze zu transportieren.

Das fertige Druckbild wird nach Durchlaufen sämtlicher Druckstationen getrocknet und mit Elektronenstrahlung vollständig gehärtet.

Die erfindungsgemässen Druckfarben bzw. Drucklacke können optional weitere Additive und Hilfsstoffe umfassen. Beispiele für Additive und Hilfsstoffe sind Füllstoffe wie Calciumcarbonat, Aluminiumoxidhydrat oder Aluminium-bzw. Magnesiumsilikat. Wachse erhöhen die Abriebfestigkeit und dienen der Erhöhung der Gleitfähigkeit.

Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden.

Weichmacher dienen der Erhöhung der Elastizität des getrockneten Films. Beispiele sind Phthalsäureester wie Dibutylphthalat, Diisobutylphthalat, Dioctylphthalat, Citronensäureester oder Ester der Adipinsäure. Zum Dispergieren der Pigmente können Dispergierhilfsmittel eingesetzt werden. Bei den erfindungsgemässen Flüssigdruckfarben bzw. Drucklacken kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew.% bezüglich der Summe aller Bestandteile und beträgt bevorzugt 0-10 Gew. %.

Die Schichtdicke, mit der die erfindungsgemäßen Druckfarben auf das Substrat aufgetragen werden, unterscheiden sich je nach Druckverfahren und können beispielsweise bis zu 10 µm betragen, bevorzugt 0,1 bis 8 µm, besonders bevorzugt 0,2 bis 7 µm, ganz besonders bevorzugt 1 bis 5 µm und insbesondere 1 bis 4 µm.

Für Hochdruck/Flexodruck sind Druckfarbenschichtdicken von 2 -4 µm typisch, für Offsetdruck 1 - 2 µm, für Tiefdruck 2 - 8 µm und für Siebdruck 20 - 30 µm.

Erfindungsgemäße Druckfarben für Druckverfahren lassen sich durch aktinische Strahlung härten, beispielsweise ist aktinische Strahlung mit einem Wellenlängenbereich von 200 nm bis 450 nm geeignet. Geeignet ist beispielsweise aktinische Strahlung mit einer Energie im Bereich von 70 mJ /cm² bis 2000 mJ/cm². Aktinische Strahlung kann man zweckmäßig beispielsweise kontinuierlich oder in Form von Blitzen einbringen.

Es stellt eine bevorzugte Ausführungsform der vorliegenden Erfindung dar, die Härtung der Druckfarben mittels Elektronenstrahlung in geeigneten Elektronenblitzeinrichtungen durchzuführen, beispielsweise mit einer Energie im Bereich von 70 bis 300 keV, bevorzugt 150 bis 200 keV. Es stellt einen Vorteil der Durchführung der Härtung mittels Elektronenstrahlung dar, daß die so gehärteten Druckfarben in der Regel eine bessere Reibechtheit aufweisen als Druckfarben, die mit UV-Licht gehärtet sind.

Im Fall der Durchführung der Härtung mittels Elektronenstrahlung enthält die erfindungsgemäße Druckfarbe bevorzugt keinen Photoinitiator (E). Dies hat den Vorteil, daß dabei keine migrierbaren, durch die Bestrahlung entstandenen Bestandteile von Photoinitiatoren in der Beschichtung verbleiben. Dies ist insbesondere dann von Vorteil, wenn die Beschichtungen für einen Lebensmittelkontakt vorgesehen sind.

Der Abstand der Elektronenblitzeinrichtungen zur Druckoberfläche beträgt zwischen 1 und 100 cm, vorzugsweise 5 bis 50 cm.

Selbstverständlich sind auch mehrere Strahlungsquellen für die Härtung einsetzbar um die für die optimale Härtung erforderliche Strahlungsdosis zu erreichen.

In einer Ausführungsform der vorliegenden Erfindung kann man nach dem Bedrucken und vor dem Behandeln mit aktinischer Strahlung zwischentrocknen, beispielsweise thermisch oder mit IR-Strahlung. Geeignet sind beispielsweise Temperaturen im Bereich von 30 bis 120°C über einen Zeitraum im Bereich von 10 Sekunden bis 24 Stunden, bevorzugt eine bis zu 30 min, besonders bevorzugt bis zu 5 min. Als IR-Strahlung ist beispielsweise IR-Strahlung in einem Wellenbereich über 800 nm geeignet. Geeignete Vorrichtungen zum Zwischentrocknen sind beispielsweise Trockenschränke oder Vakuumtrockenschränke für thermische Zwischentrocknung, weiterhin IR-Lampen.

Auch die bei der Einwirkung von aktinischer Strahlung entwickelte Hitze kann zwischentrocknend wirken.

Erfindungsgemäße Druckfarben und Drucke, die unter Verwendung von erfindungsgemäßen Druckfarben hergestellt werden, lassen sich jedoch auch thermisch härten, und zwar mit oder ohne die Einwirkung von aktinischer Strahlung. So ist beispielsweise möglich, durch Trocknen bei Temperaturen im Bereich von 25 bis 150°C, bevorzugt 100 bis 150 °C, besonders bevorzugt 120 bis 150 °C Drucke zu fixieren, die unter Verwendung von erfindungsgemäßen Druckfarben hergestellt sind.

Die Bestrahlung kann in einer bevorzugten Ausführungsform auch unter Ausschluß von Sauerstoff oder sauerstoffabgereicherter Atmosphäre, z. B. bei einem Sauerstoffpartialdruck von weniger als 18 kPa, bevorzugt 0,5 - 18 kPa, besonders bevorzugt 1 - 15 kPa, ganz besonders bevorzugt 1 bis 10 kPa und insbesondere 1 - 5 kPa, oder unter Inertgas-Atmosphäre, durchgeführt werden. Als Inertgase eignen sich vorzugsweise Stickstoff, Edelgase, Kohlendioxid, Wasserdampf oder Verbrennungsgase. Die Verringerung des Sauerstoffpartialdruckes kann auch durch Absenken des Umgebungsdruckes erfolgen.

Eine bevorzugte Ausführungsform der vorliegenden Erfindung stellt es dar, in einem ersten Schritt durch Dispergierung mindestens eines erfindungsgemäßen Polyurethans (A) und mindestens eines Pigments (B) zunächst ein Pigmentkonzentrat herzustellen, das dann in einem zweiten Schritt durch Zugabe eines Styrol-Acrylat-Copolymers, wie unter (G) beschrieben, als nicht-strahlungshärtbares Bindemittel zu einer einfachen Druckfarbe vermischt wird. Dies kann dann in einem dritten Schritt durch Zusatz der Komponenten (C), (D), (F) und/oder (G) zur eigentlichen Druckfarbe vermischt werden, die in einem vierten Schritt auf das gewünschte Substrat aufgebracht und in einem fünften Schritt mittels Elektronenstrahlen gehärtet wird.

Es ist auch möglich, in einem ersten Schritt durch Dispergierung mindestens eines Styrol-Acrylat-Copolymers, wie unter (G) beschrieben, und mindestens eines Pigments (B) zunächst ein Pigmentkonzentrat herzustellen, das dann in einem zweiten Schritt durch Zugabe mindestens eines erfindungsgemäßen Polyurethans (A)zu einer einfachen Druckfarbe vermischt wird. Dies kann dann in einem dritten Schritt durch Zusatz der Komponenten (C), (D), (F) und/oder (G) zur eigentlichen Druckfarbe vermischt werden, die in einem vierten Schritt auf das gewünschte Substrat aufgebracht und in einem fünften Schritt mittels Elektronenstrahlen gehärtet wird.

Gemäß einer weiteren Ausführungsform der vorliegenden Erfindung kann man mindestens zwei, bevorzugt mindestens drei verschiedene erfindungsgemäße Druckfarben für Druckverfahren zu Sets kombinieren, wobei verschiedene erfindungsgemäße Druckfarben jeweils unterschiedliche Pigmente mit jeweils unterschiedlicher Farbe enthalten.

Die Erfindung wird durch Arbeitsbeispiele erläutert.

Allgemeine Vorbemerkungen:
Der NCO-Gehalt wurde jeweils gemäß DIN 53185 titrimetrisch verfolgt.
Der Grad der Umhüllung von erfindungsgemäßen Pigmenten wurde durch Transmissionselektronenmikroskopie mit Gefrierbruchtechnik bestimmt.
Feststoffgehalt: Die Angaben in % beziehen sich m Rahmen der vorliegenden Erfindung stets auf Gew.-%. Feststoffgehalte werden im Rahmen der vorliegenden Erfindung stets durch 30-minütiges Trocknen bei 150°C ermittelt.
Die dynamische Viskosität wurde jeweils bei Zimmertemperatur bestimmt.

### I. Herstellung von erfindungsgemäßen zumindest partiell umhüllten Pigmenten

### I.1. Herstellung von erfindungsgemäßem Polyurethan

### I.1.1 Herstellung von Diisocyanat (a.1), das Allophanatgruppen und C-C-Doppelbindungen enthält

Es wurde gemäß EP 1 144 476 B1, Beispiel 1.1 vorgegangen. In einem Rührkolben wurden Hexamethylendiisocyanat (HDI) (a.1.1) unter Stickstoffbedeckung mit 2-Hydroxyethylacrylat vermischt und auf 80°C erwärmt. Es wurden 200 Gew.-ppm N,N,N-Trimethyl-N-(2-hydroxypropyl)ammonium-2-ethylhexanoat 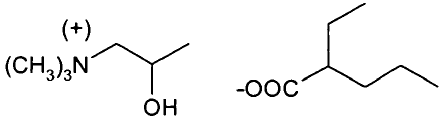 zugegeben und danach die Temperatur innerhalb einer halben Stunde auf 120°C erhöht. Danach wurde die entstehende Reaktionsmischung unter weiterem Rühren bei 120°C gehalten, bis der titrimetrisch bestimmte NCO-Gehalt 25 Gew.-% betrug, bezogen auf gesamte Reaktionsmischung. Mann stoppte die Reaktion durch Zugabe von 250 Gew.-ppm Di-(2-Ethylhexyl)-phosphat, bezogen auf (a.1.1). Das so erhältliche Gemisch wurde anschließend im Dünnschichtverdampfer bei 135°C und 2,5 mbar von nicht umgesetztem HDI befreit. Das so erhältliche Diisocyanat (a.1) hatte einen NCO-Gehalt von 15 Gew.-%, eine dynamische Viskosität von 1200 mPa·s bei 23°C. Der Rest-HDI-Gehalt war unter 0,5 Gew.-%. Die C-C-Doppelbindungsdichte betrug 2 C-C-Doppelbindungen pro Molekül.

### I.1.2 Umsetzung von (a.1) zu erfindungsgemäßem Polyurethan (A.2)

63,1 g eines Polyesterdiols mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1 : 1 : 2, wurden auf 120°C erwärmt. Die entstehende Schmelze wurde in einen 2-1-Reaktor gefüllt, ausgestattet mit Rührer, Rückflusskühler, Gaseinleitrohr und Tropftrichter, und unter Stickstoff auf 130°C erwärmt. Als das Polyesterdiol als klare Schmelze vorlag, wurde unter Rühren auf 80°C abgekühlt. Danach wurden 8,2 g Neopentylglykol und 26,8 g 2,2-Dimethylolpropionsäure sowie 0,3 g Polymerisationsinhibitor (C.1) und 0,15 g Polymerisationsinhibitor (C.2) zugegeben und danach auf 60°C abgekühlt.

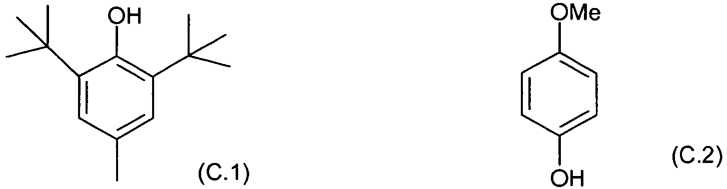

Danach wurden 297,5 g Tetrahydrofuran (THF), 185,6 g Diisocyanat (a.1) und 13,7 g Hexamethylendiisocyanat (HDI) (a.2.1) zugesetzt. Anschließend gab man 5,95 g Triethylamin zu (2 Gew%), bezogen auf gesamten Feststoffanteil) und rührte bei 60°C, bis der titrimetrisch bestimmte NCO-Gehalt auf 0,7 Gew.-%, bezogen auf gesamte Reaktionsmischung, gesunken war. Danach wurde mit Hilfe eines Eisbades auf Zimmertemperatur abgekühlt und die Reaktion durch Zugabe von 16,8 g Diethanolamin, gelöst in 16,8 g THF, abgestoppt. Anschließend neutralisierte man die Säuregruppen mit 20,2 g Triethylamin, gelöst in 20,2 g THF. Schließlich wurden der Polymerlösung in Tetrahydrofuran 1004 g Wasser zugefügt und das organische Lösungsmittel im Vakuum entfernt. Die Doppelbindungsdichte des so erhaltenen Polymers A.2 (Mₙ = 3400 g/mol; M_{w} = 13300 g/mol) betrug 1.92 mol Doppelbindungen/kg Polyurethan. Die wässrige Dispersion wies einen Feststoffgehalt von 28.9 % auf. Die Glasübergangstemperatur des Polyurethans betrug 23 °C.

### 1.2. Herstellung von erfindungsgemäßen wässrigen Dispersionen von zumindest partiell umhüllten Pigmenten, Beispiel 1

Erfindungsgemäße wässrige Dispersionen wurden auf einer Schüttelapparatur (Fa. Skandex) mit 60 g Glaskugeln (Durchmesser 0,25 - 0,5 mm) hergestellt. Die Rezepturen sind in Tabelle 1 zusammengefasst. Nach Einwiegen der Ingredienzien und der Glaskugeln im Skandex wurde die resultierende Mischung bei 4000 Upm für 30 min/kg geschüttelt.

Man erhielt die erfindungsgemäßen, wässrigen Pigmentdispersionen WP.1 und WP.2 (Tab. 1).

**Tabelle 1: Ingredienzien und Rezeptparameter für erfindungsgemäßes wässriges Pigmentkonzentrat WP.1 und WP.2**

| Inhaltsstoffe | WP.1 | WP.2 (Vergleich) |
|---|---|---|
| JONCRYL^{®} HPD 296 (35.5 %) | - | 32,4 |
| A.2 (28.9 %) | 38,1 | - |
| Tego® Foamex 810 | 0,5 | 0,5 |
| Wasser | 17,4 | 21,1 |
| Pigment | 44,0 | 46,0 |
| Pigment/Bindemittel Verhältnis | 4:1 | 4:1 |
| Pigment Gehalt Gew% | 44,0 | 46,0 |
| Leistung (W) | 400 | 700 |
| Temperatur (°C) | 30 | 40 |
| Viskosität (mPa.s) | | |
| Spindel #3/ Geschwindigkeit 6 | 1540 | 300 |

| | | |
|---|---|---|
| Mengen von Ingredienzien sind in g angegeben. | | |

Joncryl HPD296 ist ein Hochleistungspigment-Dispergiermittel, das ein sehr gutes Anreibeverhalten zeigt. Es stellt eine optimierte Formulierung aus Styrol/Acrylat-Oligomeren mit polymeren Additiven dar.

Foamex der Firma Tego ist ein konventioneller Entschäumer, der die bei den hohen Scherkräften auftretenden Luftblasen zerstört.

Als Pigment wurde ein Kupfer-Phthalocyanine Blau der Firma BASF eingesetzt (PB 15.3).

Formulierungsbeispiel 2: Herstellung der Druckfarben aus den Pigmentkonzentraten WP.1 und WP.2

Durch Vermischen der Pigmentkonzentrate mit Additiven und ggf. einem Photoinitiator wurden die erfindungsgemäßen Druckfarben PT.1 und PT.2 hergestellt. Zum Vergleich diente eine Druckfarbe PT.3 ohne strahlungshärtbares Polyurethan (Tab. 2).

**Tabelle 2. Rezeptparameter und Eigenschaften der erfindungsgemäßen, wässrigen Pigmentkonzentrate PT.1 und PT.2 und PT.4 sowie der Vergleichsdruckfarbe PT.3.**

| Inhaltsstoffe | PT.1 | PT.2 | PT.3 | PT.4 |
|---|---|---|---|---|
| Pigment concentrate | WP.1 34.1 | WP.1 34.1 | WP.2 32.6 | WP.2 32.6 |
| JONCRYL® 2647 | - | - | 61.4 | - |
| A.2 (28.9 %) | 59.9 | 59.9 | - | 61.4 |
| JONCRYL® WAX 35 | 5.0 | 5.0 | 5.0 | 5.0 |
| TegoWet® 500 | 1.0 | 1.0 | 1.0 | 1.0 |
| Darocur® 1173 (Photoinitiator) | 1.73 | - | - | 1.73 |
| Viskosität (mPa.s) | 120 | 120 | 355 | 125 |

| | | | | |
|---|---|---|---|---|
| Mengen von Ingredienzien sind in g angegeben. | | | | |

Joncryl 2647 Ist ein konventioneller polymeres Bindemittel (Styrol/Acrylat Dispersion) für Flexo- und Gravurdruckverfahren. Dieses ist nicht strahlungshärtbar und nicht selbstvemetzend. Die Funktion des Bindemittels ist, die Bestandteile der Formulierung an das Substrat zu fixieren.

TegoWet ist ein Netzmittel, das bessere Benetzung der Formulierung auf beschichteten Substraten oder nicht-absorbierenden Substraten gewährleistet

Joncryl Wax 35 ist eine Polyethylen-Wachs Emulsion, die die Reibechtheiten der bedruckten Substrate verbessert.

Reibechtheiten der verdruckten Druckfarben aus Formulierungsbeispiel 2

Die erfindungsgemäßen Druckfarben PT.1 und PT.2 und PT.4 sowie die Vergleichsdruckfarbe PT.3 wurden auf Opazitätsprüfkarten Leneta 2A (Karton) verdruckt (140 L/I).

Die Druckfarbe PT.1 sowie PT.4, die einen Photoinitiator enthielt, wurde durch Belichtung mit aktinischer Strahlung fixiert. Die Druckfarbe PT.2 enthielt keinen Photoinitiator und wurde durch Belichtung mit aktinischer Strahlung und dadurch induzierter Erwärmung lediglich thermisch fixiert. In beiden Fällen resultierte eine kovalente Vernetzung der Doppelbindungen des strahlungshärtbaren Polyurethans. Die Vergleichstinte PT.3 enthielt weder strahlungshärtbares Polyurethan noch Photoinitiator und wurde daher nur durch physikalische Trocknung (1 Minute bei 60 °C) fixiert.

Für die Bestrahlung mit aktinischer Strahlung wurde ein UV-Bestrahlungsgerät M40-2-Tr-SS der Firma IST mit zwei verschiedenen UV-Strahlem (Gallium M400 U1A und Quecksilber M400 U1) eingesetzt. Die Substrate wurden in einer UV-Belichtungsanlage zweimal bei einer Geschwindigkeit von 5 Meter pro Minute belichtet, wobei jeweils eine Energie von 650 mJ/cm² eingetragen wurde.

Auf diesem Weg wurden die erfindungsgemäßen, bedruckten Substrate S.1 und S.2 und S.4 (Druckfarben PT.1 und PT.2 und PT.4) sowie das Vergleichssubstrat S.3 (PT.3) erhalten, von denen nachfolgend die Reibechtheiten (trocken) bestimmt wurden. Hierzu wurde ein Baumwollstreifen mit Hilfe einer SATRA Testapparatur (Fa. SATRA) 200 Mal auf dem bedruckten Substrat gerieben und anschließend der Abrieb optisch beurteilt. Die Angabe des Abriebs erfolgte in Prozent der verbliebenen Beschichtung (Tab. 3).

**Tabelle 3. Echtheiten der erfindungsgemäß bedruckten Substrate S.1 - S.2 und S.4 sowie des Vergleichssubstrates S.3.**

| Substrat | Druckfarbe | Härtung | Reibechtheit trocken |
|---|---|---|---|
| S.1 | PT.1 | UV-induzierte Fixierung | 95 |
| S.2 | PT.2 | Thermische Fixierung | 90 |
| S.3 | PT.3 | Physikalische Trocknung | 50 |
| S.4 | PT.4 | UV-induzierte Fixierung | 90 |

Man erkennt, daß die Druckfarbe PT.3, in der ein Polyurethan (A) weder zur Herstellung des Pigmentkonzentrats noch als Bindemittel verwendet wurde, die geringsten Reibechtheiten erbringt.

Es kann eine Ausführungsform der vorliegenden Erfindung darstellen, das Polyurethan (A) zumindest als Bindemittel zu verwenden, wenn das Pigment in einem konventionellen Dispergiermittel dispergiert wurde (Pigmentkonzentrat WP.2 und Druckfarbe PT.4).

Besonders bevorzugt ist eine Ausführungsform der vorliegenden Erfindung, in der das Polyurethan (A) zur Dispergierung des Pigments eingesetzt wird und dieses zumindest teilweise umhüllt, unabhängig davon, welches Bindemittel zur Bereitung der Druckfarbe eingesetzt wird. Diese Ausführungsform bringt bereits bei einer rein thermischen Härtung gute Ergebnisse (PT.2), kann aber bei Einsatz von UV-Härtung noch weiter verbessert werden (PT.1). Insbesondere bevorzugt ist die Härtung per Elektronenstrahlhärtung.

Eine insbesondere bevorzugte Ausführungsform der vorliegenden Erfindung ist der Einsatz eines Polyurethans (A) sowohl bei der Dispergierung des Pigmentes als auch als Bindemittel für die Bereitung der Druckfarbe. Diese Ausführungsform bringt bereits bei einer rein thermischen Härtung gute Ergebnisse, kann aber bei Einsatz von UV-Härtung in Gegenwart von Photoinitiatoren noch weiter verbessert werden (PT.1). Insbesondere bevorzugt ist die Härtung per Elektronenstrahlhärtung, wobei bevorzugt auch auf die Anwesenheit von Photoinitiatoren verzichtet werden kann.

### I.3.1. Herstellung von wässrigen Dispersionen von zumindest partiell umhüllten Pigmenten, Beispiel mit WP.3

Eine wässrige Dispersion wurde mittels Dispermat bei 6000 Upm für 10 Minuten homogenisiert. Anschliessend wurde das Homogenisat in einer Kugelmühle (Dispermat SL) mit 100 g Zirkoniumkugeln (Durchmesser 0,8 - 1,0 mm) versetzt und bei 32°C für 30 Minuten verarbeitet (Pumpenleistung 788 Watt).

Man erhielt das wässrige Pigmentkonzentrat WP.3 (Tab. 4).

**Tabelle 4. Ingredienzien für wässriges Pigmentkonzentrat WP.3**

| Inhaltsstoffe | WP.3 |
|---|---|
| JONCRYL^{®} HPD 296 (35.5 %) | 32,8 |
| Tego® Foamex 810 | 0,5 |
| Wasser | 22,6 |
| Pigment Schwarz (Printex 55 Fluffy) | 44,1 |
| Viskosität (mPa.s), Spindel #3 Geschwindigkeit 12 | 7000 |

### 1.3.2. Herstellung der Druckfarben aus dem Pigmentkonzentrat WP.3

Durch Vermischen des Pigmentkonzentrates WP.3 mit Additiven wurde die erfindungsgemäße Druckfarbe PT.5 hergestellt.

**Tabelle 5. Rezeptparameter und Eigenschaften der erfindungsgemäßen, wässrigen Druckfarbe PT.5.**

| Inhaltsstoffe | PT.5 |
|---|---|
| Pigmentkonzentrat WP.3 | 40,0 |
| A.2 (25.1 %) | 52,0 |
| JONCRYL® WAX 35 | 5,0 |
| Tego Foamex 1488 | 0,5 |
| Verdicker | 3,0 |
| Viskosität (Auslaufzeit DIN 4; Sekunden) | 22 |

| | |
|---|---|
| Mengen von Ingredienzien sind in g angegeben. | |

### 1.3.3. Reibechtheiten der verdruckten Druckfarben PT.5

Die erfindungsgemäße Druckfarbe PT.5 wurde auf frisch Corona-behandeltes Polyethylen (4000 Watt) bei 200 m/min flexographisch verdruckt (70 L/I).

In der Konfiguration ohne Elektronenstrahlhärtung (thermische Fixierung) wurden die bedruckten Substrate mit Hilfe einer auf der Druckwalze angeordneten Trockenstation (60 °C) und einem offenen Trockenkanal thermisch fixiert. In der Konfiguration mit Elektronenstrahlhärtung ist der thermischen Fixierung die Elektronenstrahlhärtung nachgeschaltet (Elektronenstrahlhärter EZCure® der Fa. ESI, Energiedosis 30 kGy).

Auf diesem Weg wurde das erfindungsgemäße, bedruckte Substrat S.5 (Druckfarbe PT.5, mit Elektronenstrahlhärtung) sowie das Vergleichssubstrat S.6 (Druckfarbe PT.5 mit thermischer Fixierung) erhalten, von denen nachfolgend die Reibechtheiten (nass) bestimmt wurden. Hierzu wurde ein in Wasser getränkter Baumwollstreifen mit Hilfe einer SATRA Testapparatur (Fa. SATRA) 200 Mal auf dem bedruckten Substrat gerieben und anschließend der Abrieb optisch beurteilt. Die Angabe des Abriebs erfolgte in Prozent der verbliebenen Beschichtung (Tab. 6). Das Vergleichssubstrat zeigte schon bei 5 Abriebsumdrehungen vollständigen Abrieb.

**Tabelle 6. Echtheiten des erfindungsgemäß bedruckten Substrates S.5 und des Vergleichssubstrates S.6.**

| Substrat | Druckfarbe | Härtung | Reibechtheit nass |
|---|---|---|---|
| S.5 | PT.5 | Elektronenstrahlhärtung | 80 |
| S.6 | PT.5 | Thermische Fixierung | 0 |

## Patentansprüche

1. Verwendung von wäßrigen Dispersionen, enthaltend mindestens ein Polyurethan (A), mindestens ein Pigment (B) und weiterhin mindestens einen Polymerisationsinhibitor (C), wobei das mindestens eine Polyurethan (A) das mindestens eine Pigment (B) zumindest partiell umhüllt und wobei das Polyurethan (A) erhältlich ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen,wobei Angaben in Gew.-% auf gesamtes Polyurethan (A) bezogen sind,
in Druckfarben für Druckverfahren ausgewählt aus der Gruppe bestehend aus Offsetdruck, Hochdruck, Flexodruck, Gravurdruck und Tiefdruck.

2. Verwendung nach Anspruch 1, **dadurch gekennzeichnet, dass** Di- oder Polyisocyanat (a) hergestellt ist durch Umsetzung von mindestens einem Di - oder Polyisocyanat (a1) mit mindestens einer Verbindung der allgemeinen Formel I 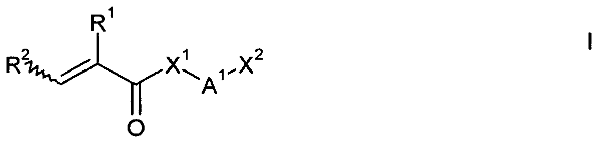 wobei die Variablen wie folgt definiert sind:
R¹, R² gleich oder verschieden und unabhängig voneinander gewählt aus Wasserstoff und C₁-C₁₀-Alkyl,
X¹ gewählt aus Sauerstoff und N-R³,
A¹ gewählt aus C₁-C₂₀-Alkylen, unsubstituiert oder ein- oder mehrfach substituiert mit C₁-C₄-Alkyl, Phenyl oder O-C₁-C₄-Alkyl, wobei in C₁-C₂₀-Alkylen eine oder mehrere nicht-benachbarte CH₂-Gruppen durch Sauerstoff ersetzt sein können;
X² gewählt aus Hydroxyl und NH-R³,
R³ gleich oder verschieden und gewählt aus Wasserstoff, C₁-C₁₀-Alkyl und Phenyl.

3. Verwendung nach Anspruch 1 oder 2, **dadurch gekennzeichnet, dass** man mindestens eine Verbindung mit mindestens zwei mit Isocyanat zur Reaktion befähigten Gruppen (c) wählt aus 1,1,1-Trimethylol-C₁-C₄-Alkylcarbonsäuren, Zitronensäure, 2,2-Dimethylol-C₁-C₄-Alkylcarbonsäuren, 2,2-Dimethylol-C₁-C₄-Alkylsulfonsäuren, Poly-C₂-C₃-alkylenglykolen mit im Mittel 3 bis 300 C₂-C₃-Alkylenoxideinheiten pro Molekül, hydrophilen Polyaminen mit COOM- oder SO₃M-Gruppen, wobei M gewählt wird aus Alkalimetallionen und Ammoniumionen, Polyesterdiolen, die herstellbar sind durch Polykondensation von mindestens einem aliphatischen oder cycloaliphatischen Diol mit mindestens einer aliphatischen, aromatischen oder cycloaliphatischen Dicarbonsäure.

4. Verwendung nach einem der Ansprüche 1 bis 3, enthaltend weiterhin mindestens ein Polyurethan (D), das durch Umsetzung von Di- oder Polyisocyanat (b) mit Verbindung mit mindestens zwei mit Isocyanat zur Reaktion befähigten Gruppen (c) erhältlich ist.

5. Verwendung nach Anspruch 4, **dadurch gekennzeichnet, dass** Pigment (B) partiell mit Polyurethan (D) umhüllt ist.

6. Verwendung nach einem der Ansprüche 1 bis 5, **dadurch gekennzeichnet, dass** Polyurethan (A) eine Glastemperatur T_{g} von maximal 60°C aufweist.

7. Verwendung nach einem der Ansprüche 1 bis 6, **dadurch gekennzeichnet, daß** die wäßrige Dispersion mindestens einen Photoinitiator (E) enthält.

8. Verwendung nach einem der Ansprüche 1 bis 6, **dadurch gekennzeichnet, daß** die wäßrige Dispersion in Abwesenheit eines Photoinitiators (E) durch Elektronenstrahlung gehärtet wird.

9. Verwendung nach einem der Ansprüche 1 bis 8, **dadurch gekennzeichnet, dass** man Polyurethan (A) herstellt durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen und
(d) optional mindestens einer Verbindung der allgemeinen Formel I,
wobei Angaben in Gew.-% auf gesamtes Polyurethan (A) bezogen sind.

10. Verfahren zum Bedrucken von Substraten, **dadurch gekennzeichnet, daß** man ein Substrat mit einer Druckfarbe wie beschrieben in Anspruch 1 mit einem Druckverfahren ausgewählt aus der Gruppe bestehend aus Offsetdruck, Hochdruck, Flexodruck, Gravurdruck und Tiefdruck bedruckt.

11. Verfahren gemäß Anspruch 10, **dadurch gekennzeichnet, daß** das Substrat ausgewählt ist aus der Gruppe bestehend aus Papier, Pappe, Karton, Polyester enthaltende Folien, Polyethylen enthaltende Folien und Polypropylen enthaltende Folien, Glas

12. Verfahren gemäß einem der Ansprüche 10 bis 11, **dadurch gekennzeichnet, daß** man die Härtung der Druckfarben, die keinen Photoinititator enthalten, mittels Elektronenstrahlung in geeigneten Elektronenblitzeinrichtungen mit einer Energie von von 70 bis 300 keV durchführt.

## Claims

1. The use of aqueous dispersions comprising at least one polyurethane (A), at least one pigment (B) and further comprising at least one polymerization inhibitor (C), wherein the at least one polyurethane (A) at least partially envelops the at least one pigment (B), said polyurethane (A) being obtainable by reaction of
(a) 15% to 70% by weight of di- or polyisocyanate comprising on average from 1 to 10 allophanate groups and on average from 1 to 10 C-C double bonds per molecule, and optionally
(b) 0% to 60% by weight of further di- or polyisocyanate, with
(c) 5% to 50% by weight of compound having at least two isocyanate-reactive groups, weight %ages being based on total polyurethane (A), in printing inks for printing processes selected from the group consisting of offset printing, letterpress printing, flexographic printing, gravure printing and intaglio printing.

2. The use according to claim 1 wherein said di- or polyisocyanate (a) is prepared by reaction of at least one di- or polyisocyanate (a1) with at least one compound of the general formula I 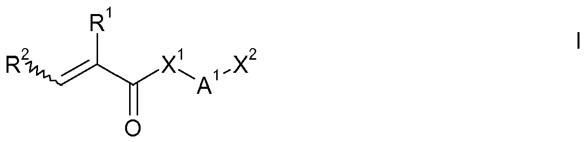 where
R¹ and R² are the same or different and are independently selected from hydrogen and C₁-C₁₀-alkyl,
X¹ is selected from oxygen and N-R³,
A¹ is selected from C₁-C₂₀-alkylene which is unsubstituted or singly or multiply substituted by C₁-C₄-alkyl, phenyl or O-C₁-C₄-alkyl, and in which one or more nonadjacent CH₂ groups may be replaced by oxygen;
X² is selected from hydroxyl and NH-R³,
R³ is in each occurrence the same or different and selected from hydrogen, C₁-C₁₀-alkyl and phenyl.

3. The use according to claim 1 or 2 wherein at least one compound having at least two isocyanate-reactive groups (c) is selected from 1,1,1-trimethylol-C₁-C₄-alkylcarboxylic acids, citric acid, 2,2-dimethylol-C₁-C₄-alkylcarboxylic acids, 2,2-dimethylol-C₁-C₄-alkylsulfonic acids, poly-C₂-C₃-alkylene glycols having on average from 3 to 300 C₂-C₃-alkylene oxide units per molecule, hydrophilic polyamines having COOM or SO₃M groups, where M is selected from alkali metal ions and ammonium ions, polyesterdiols preparable by polycondensation of at least one aliphatic or cycloaliphatic diol with at least one aliphatic, aromatic or cycloaliphatic dicarboxylic acid.

4. The use according to any one of claims 1 to 3 of aqueous dispersions further comprising at least one polyurethane (D) which is obtainable by reaction of di- or polyisocyanate (b) with compound having at least two isocyanate-reactive groups (c).

5. The use according to claim 4 wherein said pigment (B) is partially enveloped by polyurethane (D).

6. The use according to any one of claims 1 to 5 wherein said polyurethane (A) has a glass transition temperature T_{g} of not more than 60°C.

7. The use according to any one of claims 1 to 6 wherein said aqueous dispersion comprises at least one photoinitiator (E).

8. The use according to any one of claims 1 to 6 wherein the aqueous dispersion is cured by electron radiation in the absence of a photoinitiator (E).

9. The use according to any one of claims 1 to 8 wherein said polyurethane (A) is prepared by reaction of
(a) 15% to 70% by weight of di- or polyisocyanate comprising on average from 1 to 10 allophanate groups and on average from 1 to 10 C-C double bonds per molecule, and optionally
(b) 0% to 60% by weight of further di- or polyisocyanate, with
(c) 5% to 50% by weight of compound having at least two isocyanate-reactive groups, and optionally
(d) at least one compound of the general formula I,
wherein weight %ages are based on total polyurethane (A).

10. A process for printing a substrate, which comprises printing a substrate with a printing ink as described in claim 1 using a printing process selected from the group consisting of offset printing, letterpress printing, flexographic printing, gravure printing and intaglio printing.

11. The process according to claim 10 wherein the substrate is selected from the group consisting of paper, paperboard, cardboard, polyester-containing self-supporting film, polyethylene-containing self-supporting film and polypropylene-containing self-supporting film, glass.

12. The process according to any one of claims 10 to 11 wherein the curing of the printing inks which comprise no photoinititator is effected by means of electron radiation in suitable electron flash devices using an energy of 70 to 300 keV.

## Revendications

1. Utilisation de dispersions aqueuses, contenant au moins un polyuréthane (A), au moins un pigment (B) et en outre au moins un inhibiteur de polymérisation (C), ledit au moins un polyuréthane (A) enrobant au moins partiellement ledit au moins un pigment (B) et le polyuréthane (A) pouvant être obtenu par mise en réaction de
(a) 15 à 70 % en poids d'un di- ou polyisocyanate qui comporte en moyenne par molécule 1 à 10 groupes allophanate et en moyenne 1 à 10 doubles liaisons C-C, et éventuellement
(b) 0 à 60 % en poids d'un autre di- ou polyisocyanate, avec
(c) 5 à 50 % en poids d'un composé comportant au moins deux groupes aptes à réagir avec un isocyanate, les données en % en poids se rapportant au polyuréthane (A) total,
dans des encres d'impression pour des procédés d'impression choisis dans le groupe constitué par l'impression offset, l'impression typographique, l'impression flexographique, l'impression en creux et l'impression hélio.

2. Utilisation selon la revendication 1, **caractérisée en ce que** le di- ou polyisocyanate (a) est préparé par mise en réaction d'au moins un di- ou polyisocyanate (a1) avec au moins un composé de formule générale I 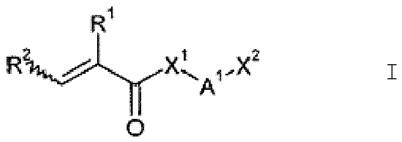 dans laquelle les variables sont définies comme suit :
R¹, R² sont identiques ou différents et choisis, indépendamment l'un de l'autre parmi un atome d'hydrogène et un groupe alkyle en C₁-C₁₀,
X¹ est choisi par un atome d'oxygène et N-R³,
A¹ est choisi parmi un groupe alkylène en C₁-C₂₀, non substitué ou une ou plusieurs fois substitué par alkyle en C₁-C₄, phényle ou O-alkyle(C₁-C₄), dans le groupe alkylène en C₁-C₂₀ un ou plusieurs groupes CH₂ non contigus pouvant être remplacés par un atome d'oxygène ;
X² est choisi parmi un groupe hydroxy et NH-R³,
R³ est le même ou différent et choisi un atome d'hydrogène, un groupe alkyle en C₁-C₁₀ et le groupe phényle.

3. Utilisation selon la revendication 1 ou 2, **caractérisée en ce qu'**on choisit au moins un composé (c) comportant au moins deux groupes aptes à réagir avec un isocyanate parmi les acides 1,1,1-triméthylolalkyl(C₁-C₄)carboxyliques, l'acide citrique, des acides 2,2-diméthylol-alkyl(C₁-C₄)carboxyliques, des acides 2,2-diméthylol-alkyl(C₁-C₄)sulfoniques, des polyalkylène(C₂-C₃)glycols comportant en moyenne de 3 à 300 unités oxyde d'alkylène en C₂-C₃ par molécule, des polyamines hydrophiles comportant des groupes COOM ou SO₃M, M étant choisi parmi des ions de métaux alcalins et des ions ammonium, des polyesterdiols qui peuvent être préparés par polycondensation d'au moins un diol aliphatique ou cycloaliphatique avec au moins un acide dicarboxylique aliphatique, aromatique ou cycloaliphatique.

4. Utilisation selon l'une quelconque des revendications 1 à 3, de dispersions aqueuses contenant encore au moins un polyuréthane (D) qui peut être préparé par mise en réaction d'un di- ou polyisocyanate (b) avec un composé (c) comportant au moins deux groupes aptes à réagir avec un isocyanate.

5. Utilisation selon la revendication 4, **caractérisée en ce que** le pigment (B) est partiellement enrobé avec le polyuréthane (D).

6. Utilisation selon l'une quelconque des revendications 1 à 5, **caractérisée en ce que** le polyuréthane (A) présente une température de transition vitreuse Tg d'au maximum 60 °C.

7. Utilisation selon l'une quelconque des revendications 1 à 6, **caractérisée en ce que** la dispersion aqueuse contient au moins un photoamorceur (E).

8. Utilisation selon l'une quelconque des revendications 1 à 6, **caractérisée en ce qu'**on fait durcir la dispersion aqueuse par exposition à un faisceau d'électrons en absence d'un photoamorceur (E).

9. Utilisation selon l'une quelconque des revendications 1 à 8, **caractérisée en ce qu'**on prépare le polyuréthane (A) par mise en réaction de
(a) 15 à 70 % en poids d'un di- ou polyisocyanate qui comporte en moyenne par molécule 1 à 10 groupes allophanate et en moyenne 1 à 10 doubles liaisons C-C, et éventuellement
(b) 0 à 60 % en poids d'un autre di- ou polyisocyanate, avec
(c) 5 à 50 % en poids d'un composé comportant au moins deux groupes aptes à réagir avec un isocyanate et
(d) en option au moins un composé de formule générale I,
les données en % en poids se rapportant au polyuréthane (A) total.

10. Procédé pour l'impression de supports, **caractérisé en ce qu'**on imprime un support avec une encre d'impression telle que décrite dans la revendication 1, par un procédé d'impression choisi dans le groupe constitué par l'impression offset, l'impression typographique, l'impression flexographique, l'impression en creux et l'impression hélio.

11. Procédé selon la revendication 10, **caractérisé en ce que** le support est choisi dans le groupe constitué par le papier, le carton, le carton mince, des films contenant du polyester, des films contenant du polyéthylène et des films contenant du polypropylène, le verre.

12. Procédé selon l'une quelconque des revendications 10 et 11, **caractérisé en ce qu'**on effectue le durcissement des encres d'impression, qui ne contiennent pas de photoamorceur, au moyen d'exposition à un faisceau d'électrons dans des dispositifs de flash électronique appropriés avec une énergie de 70 à 300 keV.
